(19) Europäisches Patentamt
European Patent Office
Office européen des brevets

(11) EP 4 657 248 A1

(12) **EUROPEAN PATENT APPLICATION**
published in accordance with Art. 153(4) EPC

(43) Date of publication:
03.12.2025 Bulletin 2025/49

(51) International Patent Classification (IPC):
*G06F 9/451* (2018.01)

(21) Application number: 24774230.7

(52) Cooperative Patent Classification (CPC):
G06F 9/451; G06F 9/48

(22) Date of filing: 21.03.2024

(86) International application number:
PCT/CN2024/083106

(87) International publication number:
WO 2024/193666 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2023 CN 202310294472

(71) Applicant: Huawei Technologies Co., Ltd.
Shenzhen, Guangdong 518129 (CN)

(72) Inventors:
• LIU, Daoyong
Shenzhen, Guangdong 518129 (CN)
• LIU, Lei
Shenzhen, Guangdong 518129 (CN)
• LU, Jianhai
Shenzhen, Guangdong 518129 (CN)
• LU, Dong
Shenzhen, Guangdong 518129 (CN)
• WANG, Zhengyun
Shenzhen, Guangdong 518129 (CN)

(74) Representative: Gill Jennings & Every LLP
The Broadgate Tower
20 Primrose Street
London EC2A 2ES (GB)

(54) **DISPLAY METHOD FOR ELECTRONIC DEVICE, AND ELECTRONIC DEVICE AND STORAGE MEDIUM**

(57) Embodiments of this application provide a display method for an electronic device, an electronic device, and a storage medium. The method includes: The electronic device receives a first operation of a user. The first operation is used to trigger playing of a first animation of a first application. The electronic device invokes a UI thread in response to the first operation, to obtain first initial property information and first final property information. The electronic device determines, through a render thread based on the first initial property information and the first final property information, at least one piece of first intermediate property information corresponding to the first animation. The electronic device draws and renders the first animation through the render thread based on the first initial property information, the first final property information, and the at least one piece of first intermediate property information, to obtain M image frames of the first animation. The electronic device plays the first animation based on the M image frames. This decouples animations from the UI thread and can resolve a problem that an animation interface freezes due to high load of the UI thread.

An electronic device receives a first operation of a user, where the first operation is used to trigger playing of a first animation of a first application — 301

The electronic device invokes a UI thread in response to the first operation, to obtain initial property information and final property information that correspond to the first animation — 302

The electronic device determines, through a render thread based on the initial property information and the final property information, at least one piece of intermediate property information corresponding to the first animation — 303

The electronic device draws and renders the first animation through the render thread based on the initial property information, the final property information, and the at least one piece of intermediate property information — 304

The electronic device plays the first animation — 305

FIG. 3

EP 4 657 248 A1

**Description**

CROSS-REFERENCE TO RELATED APPLICATIONS

This application claims priority to Chinese Patent Application No. 202310294472.1, filed with the China National Intellectual Property Administration on March 22, 2023 and entitled "DISPLAY METHOD FOR ELECTRONIC DEVICE, ELECTRONIC DEVICE, AND STORAGE MEDIUM", which is incorporated herein by reference in its entirety.

TECHNICAL FIELD

The present invention relates to the field of electronic technologies, and in particular, to a display method for an electronic device, an electronic device, and a storage medium.

BACKGROUND

With continuous development of information technologies, electronic devices have become an indispensable tool in people's lives. For example, a user may install various applications (application, APP) on an electronic device. To bring good user experience, the electronic device plays an animation in an application startup or exit phase.

When an application runs, a process is created. The process includes a main thread (namely, UI thread) and a render process. In a current animation framework, the UI thread processes service events, executes animations, performs page measurement, layout, and drawing, and the like. The render thread is woken up by a service thread when data is synchronized per frame. After the data is synchronized, the render thread performs rendering. When the UI thread is busy and has high time consumption or high load, it is easy to cause animation drawing not to be executed, resulting in problems such as animation frame loss and interface freezing, and poor user experience.

SUMMARY

Embodiments of this application provide a display method for an electronic device, an electronic device, and a storage medium, which are applied to an electronic device with a display, to resolve a problem that an animation interface freezes due to high load of a main thread.

According to a first aspect, an embodiment of this application provides a display method for an electronic device, applied to an electronic device with a display. The method includes: The electronic device receives a first operation of a user. The first operation is used to trigger playing of a first animation of a first application. The electronic device invokes a UI thread in response to the first operation, to obtain first initial property information and first final property information. The electronic device determines, through a render thread based on the first initial property information and the first final property information, at least one piece of first intermediate property information corresponding to the first animation. The electronic device draws and renders the first animation through the render thread based on the first initial property information, the first final property information, and the at least one piece of first intermediate property information, to obtain M image frames of the first animation. The electronic device plays the first animation based on the M image frames.

According to the method, the UI thread is invoked to obtain the first initial property information and the first final property information, and the first animation is computed, drawn, and rendered through the render thread, to decouple animations from the UI thread. In this way, animation display is not affected even if the UI thread has high load or processes time-consuming service logic. This can resolve a problem that an animation interface freezes due to high load of a main thread (the UI thread).

In a possible design, any one of the first initial property information, the first final property information, and the at least one piece of first intermediate property information includes at least one of the following: an X-direction scale factor, a Y-direction scale factor, an X-direction translation distance, a Y-direction translation distance, a value of cropping from a left border, a value of cropping from a right border, a value of cropping from a top, a value of cropping from a bottom, transparency, and a rounded corner property value.

In a possible design, the electronic device may further receive a second operation of the user when playing the first animation. The second operation is used to trigger playing of a second animation of the first application. The electronic device invokes the UI thread in response to the second operation, to obtain second final property information. The electronic device determines, through the render thread based on second initial property information and the second final property information, at least one piece of second intermediate property information corresponding to the second animation. The second initial property information is property information corresponding to an image frame displayed when the electronic device receives the second operation. The electronic device draws and renders the second animation through the render thread based on the second initial property information, the second final property information, and the at least one piece of second intermediate property information, to obtain N image frames of the second animation. The electronic device plays the second animation based on the N image frames. According to this design, when playing the first animation, the electronic device receives the second operation and may directly play the second animation. This implements an animation interruptibility mechanism and eliminates a need to wait for the first animation to be played before playing the second animation, so that user experience can be improved.

In a possible design, before the electronic device receives the first operation of the user, the method includes: The electronic device displays a home screen. The first animation is a startup animation of the first application. After the electronic device receives the second operation of the user, the method further includes: If an operation distance of the second operation is less than a threshold, determining that the second animation is a hand-following animation; or if the operation distance of the second operation is greater than or equal to the threshold, determining that the second animation is a return-to-home animation.

In a possible design, the first application is in a started state when the electronic device receives the first operation of the user. The first animation is an exit animation of the first application. The second animation is a reverse animation of the exit animation.

In a possible design, property information corresponding to the M image frames of the first animation and property information corresponding to the N image frames of the second animation conform to a spring curve, so that smooth transition from the first animation to the second animation can be implemented.

In a possible design, an animation leash corresponding to the second animation is the same as an animation leash corresponding to the first animation. The first animation and the second animation are animations drawn through the same animation leash. Therefore, the first animation and the second animation belong to a same animation, and unnatural transition from the first animation to the second animation does not occur.

According to a second aspect, an embodiment of this application further provides an electronic device. The electronic device includes modules/units for performing the method in any possible design of any one of the foregoing aspects. These modules/units may be implemented by hardware, or may be implemented by hardware executing corresponding software.

According to a third aspect, an embodiment of this application provides an electronic device, including a processor, a memory, and a display. The display is configured to display a user interface. The memory is configured to store one or more computer programs. When the computer program is executed by the processor, the electronic device is enabled to perform the method according to the first aspect or any possible design of the first aspect.

According to a fourth aspect, an embodiment of this application further provides a computer-readable storage medium. The computer-readable storage medium includes a computer program. When the computer program is run on an electronic device, the electronic device is enabled to perform the method according to the first aspect or any possible design of the first aspect.

According to a fifth aspect, an embodiment of this application further provides a computer program product. When the computer program product is run on a terminal, the electronic device is enabled to perform the method according to the first aspect or any possible design of the first aspect.

For beneficial effects of the second aspect to the fifth aspect, refer to beneficial effects of the first aspect. Details are not described again.

## BRIEF DESCRIPTION OF DRAWINGS

FIG. 1 is a diagram of a hardware structure of a mobile phone according to an embodiment of this application;
FIG. 2A is a diagram of a software structure of a mobile phone according to an embodiment of this application;
FIG. 2B is a diagram of a spring curve according to an embodiment of this application;
FIG. 3 is a schematic flowchart of a display method for an electronic device according to an embodiment of this application;
FIG. 4A is a diagram of a home screen according to an embodiment of this application;
FIG. 4B is a diagram of image frames of a startup animation of WeChat according to an embodiment of this application;
FIG. 4C is a diagram of an interface of WeChat according to an embodiment of this application;
FIG. 5A and FIG. 5B are a sequence diagram of interruptible application startup according to an embodiment of this application;
FIG. 6A to FIG. 6D are diagrams of a group of user interfaces according to an embodiment of this application;
FIG. 6E is a diagram of image frames of a hand-following animation according to an embodiment of this application;
FIG. 7A is a diagram of reported touch points in a hand-following scenario according to an embodiment of this application;
FIG. 7B is a diagram of a spring curve according to an embodiment of this application;
FIG. 8A to FIG. 8D are diagrams of a group of user interfaces according to an embodiment of this application;

FIG. 8E is a diagram of image frames of a return-to-home animation according to an embodiment of this application;

FIG. 9A to FIG. 9C are a sequence diagram of interruptible application exit according to an embodiment of this application;

FIG. 10 is a diagram of image frames of a return-to-home animation according to an embodiment of this application;

FIG. 11A to FIG. 11E are diagrams of a group of user interfaces according to an embodiment of this application;

FIG. 12A to FIG. 12C are diagrams of a group of user interfaces according to an embodiment of this application;

FIG. 13A to FIG. 13E are diagrams of a group of user interfaces according to an embodiment of this application; and

FIG. 14 is a diagram of a hardware structure of an electronic device according to an embodiment of this application.

## DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a", "an", "the", and "this" of singular forms used in this specification and the appended claims of this application are also intended to include expressions such as "one or more", unless otherwise specified in the context clearly. It should be further understood that in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

"A plurality of' in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

This application provides a display method for an electronic device, an electronic device, and a storage medium, to resolve a problem that an animation interface freezes due to high load of a main thread. The method and the electronic device are based on a same technical concept. Because the method and the electronic device have similar principles for resolving the problem, reference may be mutually made to implementations of the electronic device and the method. No repeated description is provided.

In the solution provided in embodiments of this application, a UI thread processes service events, performs page measurement and layout, and the like, and a render thread processes, computes, and draws animations, to decouple animations from the UI thread. In this way, animation display is not affected even if the UI thread has high load or processes time-consuming service logic. This can resolve a problem that an animation interface freezes due to high load of a main thread.

The following describes some terms in this application, to help a person skilled in the art have a better understanding.

(1) An electronic device is a device that is configured with a display and can perform human-machine interaction through the display. For example, the electronic device may be a mobile phone, a tablet computer, a notebook computer, a netbook, a vehicle-mounted device, a business intelligent terminal (including a video phone, a conference desktop intelligent terminal, and the like), a personal digital assistant (personal digital assistant, PDA), an augmented reality (augmented reality, AR) device, a virtual reality (virtual reality, VR) device, or the like. The electronic device includes a component (such as a processor, an application processor, an image processor, or another processor) that can implement a data processing function, and a component (such as a display) that can display a user interface. An example embodiment of the electronic device includes but is not limited to a device using iOS®, Android®, Microsoft®, or another operating system. The electronic device may alternatively be another portable device, for example, a laptop (laptop) with a touch-sensitive surface (for example, a touch panel). It should be further understood that in some other embodiments of this application, the electronic device 01 may alternatively be a desktop computer with a touch-sensitive surface (for example, a touch panel), but not a portable electronic device. A specific form of the electronic device is not limited in embodiments of this application.

(2) An interface, namely, a user interface (user interface, UI), is presented on a display, and is a medium interface for interaction and information exchange between a user and an application on or an operating system of an electronic device. The interface may implement conversion between an internal form of information and a visual form of the user. A frequently used representation form of the user interface is a graphical user interface (graphic user interface, GUI), and is a user interface displayed in a graphical manner and related to a computer operation. It may be an interface element such as an icon, a window, or a control displayed on a display of the electronic device. The control may include a visual interface element such as an icon, a button, a menu, a tab, a text box, a dialog box, a status bar, a navigation bar, and a widget.

(3) A process (process) is an execution activity that is of a computer program and that is related to a specific data set, acting as a basic unit for resource allocation and scheduling by a system, and a structural basis of an operating system. When an application is started, a process of the application is created.

(4) A thread (thread) is a minimum unit for an operating system to perform computing and scheduling. The thread is included in a process and is an actual operating unit of the process. One thread is a single sequential control flow in a process. A plurality of threads can be concurrently executed in one process. Each thread executes different tasks in parallel. The plurality of threads in the same process share all system resources in the process, such as virtual address space, a file descriptor, and signal processing.

A structure of the electronic device is further described with reference to the accompanying drawings.

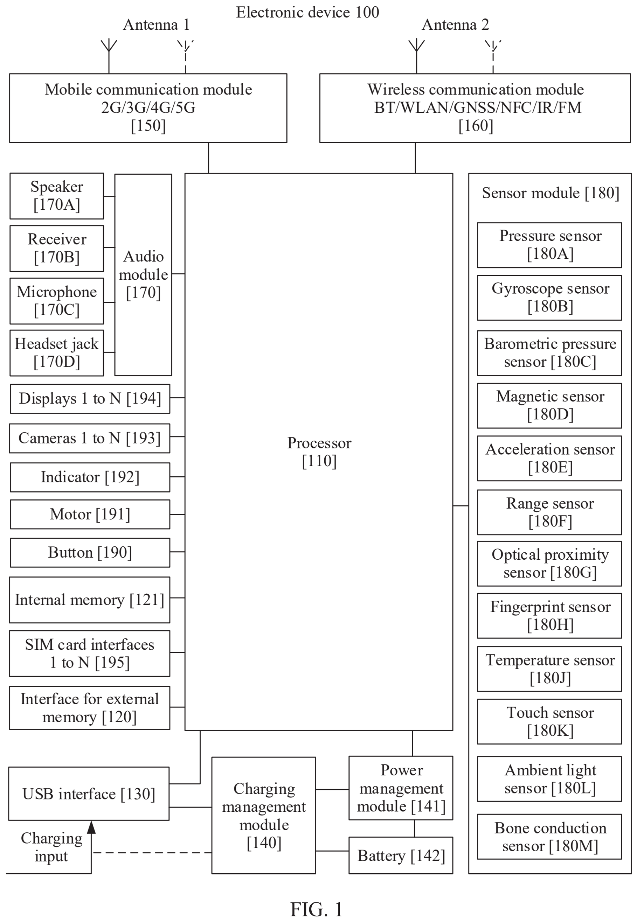

FIG. 1 is merely a diagram of a hardware structure of an electronic device 100 according to an embodiment of this application. Based on the hardware structure shown in FIG. 1, another structural modification may further exist. As shown in FIG. 1, the electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include one or more of a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

The following describes in detail the components of the electronic device 100 shown in FIG. 1.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The processor may be a nerve center and a command center of the electronic device 300. The processor may generate an operation control signal based on instruction operation code and a time series signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the instructions or the data may be directly invoked from the memory. This can avoid repeated access and reduce a waiting time of the processor 110, to improve system efficiency.

In some embodiments, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. It may be understood that an interface connection relationship between modules illustrated in this embodiment of this application is merely an illustrative description, and does not constitute a limitation on the structure of the electronic device 100.

The charging management module 140 is configured to receive a charging input from a charger. The power management module 141 is configured to connect to the battery 142, the charging management module 140, and the processor 110. A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution applied to the electronic device 100 and including 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least one functional module of the mobile communication module 150 may be disposed in the processor 110. In some embodiments, at least one functional module of the mobile communication module 150 may be disposed in a same device as at least one module of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution applied to the electronic device 100 and including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled and the antenna 2 and the wireless communication module 160 are coupled, so that the electronic device 100 can communicate with a network and another device through a wireless communication technology.

The electronic device 100 implements a display function through the GPU, the display 194, the application processor, and the like. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include 1 or N displays 194, where N is a positive integer greater than 1.

In some other embodiments, the electronic device 100 may implement a photographing function by using the ISP, the camera 193, the video codec, the GPU, the display 194, the application processor, and the like.

The interface for external memory 120 may be used to connect to an external storage card, for example, a micro SD card, to extend a storage capability of the electronic device 100. The external storage card communicates with the processor 110 through the interface for external memory 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system and an application needed by at least one function. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

Although not shown in FIG. 1, the electronic device 100 may further include a Bluetooth apparatus, a positioning apparatus, a flash, a micro projection apparatus, a near field communication (near field communication, NFC) apparatus, and the like. Details are not described herein.

It may be understood that the structure shown in this embodiment of this application does not constitute a specific limitation on the electronic device 100. In some other embodiments of this application, the electronic device 100 may include more or fewer components than those shown in FIG. 1, or some components may be combined, or some components may be split, or there may be a different component layout. The components shown in FIG. 1 may be implemented by hardware, software, or a combination of software and hardware.

The following embodiments may be all implemented by the electronic device 100 having the foregoing hardware structure.

A software system of the electronic device may use a layered architecture, an event-driven architecture, a microkemel architecture, a microservice architecture, or a cloud architecture. In embodiments of this application, a software system (such as an Android® system) with a layered architecture is used as an example to describe a software structure of the electronic device.

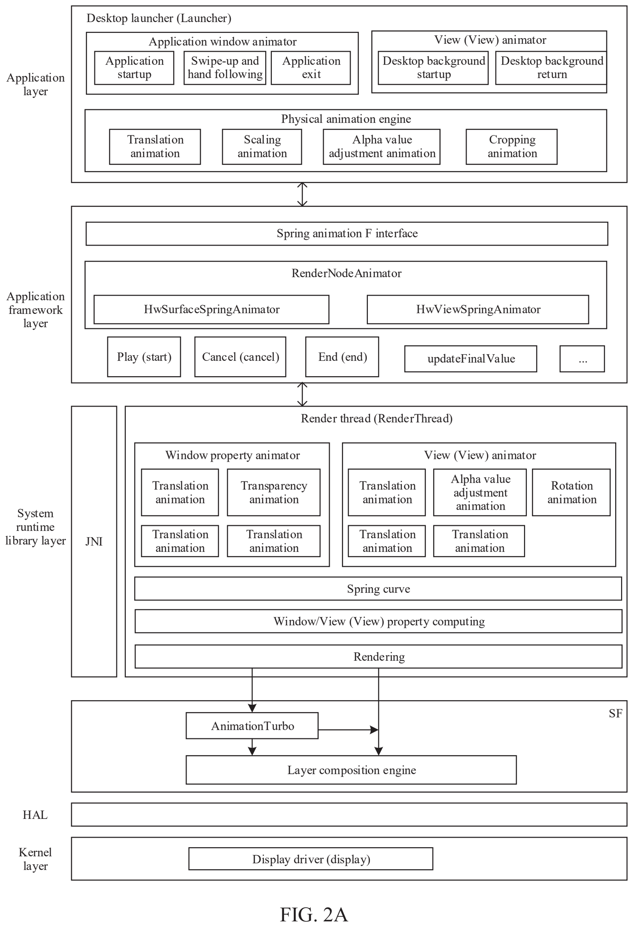

FIG. 2A is an example of a diagram of a layered software structure of an electronic device according to an embodiment of this application. In a layered architecture, a software system of the electronic device is divided into a plurality of layers, and each layer has a clear role and task. The layers communicate with each other through a software interface.

In some embodiments, an Android system is divided into five layers: an application layer (applications), an application framework layer (application framework), a system runtime library layer (Native), a hardware abstraction layer (hardware abstraction layer, HAL), and a kernel layer (kernel). The layers of the software structure of the electronic device are not limited in embodiments of this application. It should be understood that in FIG. 2A, a hardware layer in the electronic device is further added based on the Android system.

It should be understood that modules included in the layers shown in FIG. 2A are modules in this embodiment of this application, and modules included in the following layers do not constitute a limitation on a structure of the electronic device and a layer (example description) at which modules are deployed. In an embodiment, the modules shown in FIG. 2A may be separately deployed, or several modules may be deployed together. Division into the modules in FIG. 2A is an example. In an embodiment, names of the modules shown in FIG. 2A are examples for description.

The application layer may include a series of application packages. The application layer may include but is not limited to applications such as Camera, Gallery, Calendar, Call, Map, Navigation, Bluetooth, Music, Video, and Messages. In some embodiments, the application layer further includes a desktop launcher (Launcher) in the Android system. A desktop interface (user interface, UI) of the Android system is called the launcher. The desktop interface includes icons of applications installed on the electronic device. For example, the desktop interface includes icons of Phone, Email, Calendar, Camera, and the like. The user may start the corresponding applications by tapping these icons.

When an application runs, the electronic device creates a process for the application, to execute all tasks (for example, accessing a network, displaying a user interface, and refreshing a user interface) in the application. A plurality of tasks in the application are allocated to threads in the process for execution. One process may include one UI thread and a plurality of non-UI threads. The UI thread may also be referred to as a main thread. The UI thread runs in the launcher. The non-UI thread is, for example, a render thread (RenderThread) in FIG. 2A. The render thread is in a system library. In embodiments of this application, the UI thread performs event processing, measurement and layout, and the like. Functions such as animation execution and drawing are moved to the render thread in the system library, to decouple animations from the UI thread. This can reduce load of the UI thread and resolve problems such as animation frame loss and interface freezing caused by excessively high load of the UI thread.

The launcher includes an application window animator, a view animator, and a physical animation engine. The application window animator may create animation tasks such as application startup, swipe-up and hand following, and application exit. The view animator may create animation tasks such as desktop background startup and desktop background return. The physical animation engine may generate a translation animation, a scaling animation, a transparency animation, a cropping animation, and the like.

The application framework layer may provide an application programming interface (application programming interface, API) and a programming framework for an application at the application layer. The application framework layer may include some predefined functions.

As shown in FIG. 2A, the application framework layer may include a spring animation F interface, an activity manager service (activity manager service, AMS), a window manager service (window manager service, WMS), and RenderNodeAnimator.

The physical animation engine may invoke the render thread through the spring animation F interface, to complete computing, drawing, rendering, and the like of the corresponding animation through the render thread.

The AMS is configured to manage a life cycle of each application and a navigation rollback function.

The WMS is configured to manage a window program. The window manager may obtain a size of a display, determine whether there is a status bar, lock a screen, take a screenshot, and the like.

RenderNodeAnimator includes HwSurfaceSpringAnimator and HwViewSpringAnimator. HwSurfaceSpringAnimator may be configured to animate a window. HwViewSpringAnimator may be configured to animate a view.

The application framework layer further includes functions that may be used to play (start), cancel (cancel), or end (end) animation playing, update a final value, and the like.

The system runtime library layer (Native) includes a Java native interface (java native interface, JNI), RenderThread, and a surface flinger (surface flinger, SF). The JNI is a feature of a Java native language.

RenderThread includes a window property animator, view (View) property animator, spring curve, window/view property computing module, and rendering module. The window property animator may be configured to generate a translation animation, a scaling animation, a transparency animation, and a cropping animation that conform to a spring curve for a window. The view property animator may be configured to generate a translation animation, a scaling animation, a transparency animation, a cropping animation, a rotation animation, and the like that conform to a spring curve for a view. The window/view property computing module may be configured to compute, based on initial property information corresponding to the first frame of image and final property information corresponding to the last frame of image of each property animation corresponding to a window/view, intermediate property information corresponding to each intermediate image frame. The rendering module is configured to perform drawing and rendering to obtain layers corresponding to each intermediate image frame of a property animation.

In embodiments of this application, animation properties that need to be computed for an animation include but are not limited to an X-direction scale factor (scaleX) and a Y-direction scale factor (scaleY) of scaling (scale) properties, an X-direction translation distance (translateX) and a Y-direction translation distance (translateY) of translation (translate) properties, a value of cropping from a left border (crop left), a value of cropping from a top (crop top), a value of cropping from a right border (crop right), and a value of cropping from a bottom (crop bottom) of a cropping (crop) property, a transparency (alpha) property, and a rounded corner property (cornerRadius). Each animation property conforms to a spring curve. These animation properties each correspond to one spring curve. It should be understood that when the animation is played, these spring curves simultaneously start and may end at different times.

In embodiments of this application, the spring curve may be expressed as the following formula (1):

$$x(t) = x' - e^{-\zeta \omega_n t} \left[ \Delta_x \cos(\omega_d t) + \frac{v_0 + \zeta \omega_n \Delta_x}{\omega_d} \sin \omega_d t \right] \quad (1)$$

In the formula (1), $x'$ is an initial property value, x(t) is an instantaneous property value at a moment t, $e^{-\zeta \omega_n t}$ represents exponential attenuation, and $\left[ \Delta_x \cos(\omega_d t) + \frac{v_0 + \zeta \omega_n \Delta_x}{\omega_d} \sin \omega_d t \right]$ represents periodic oscillation.

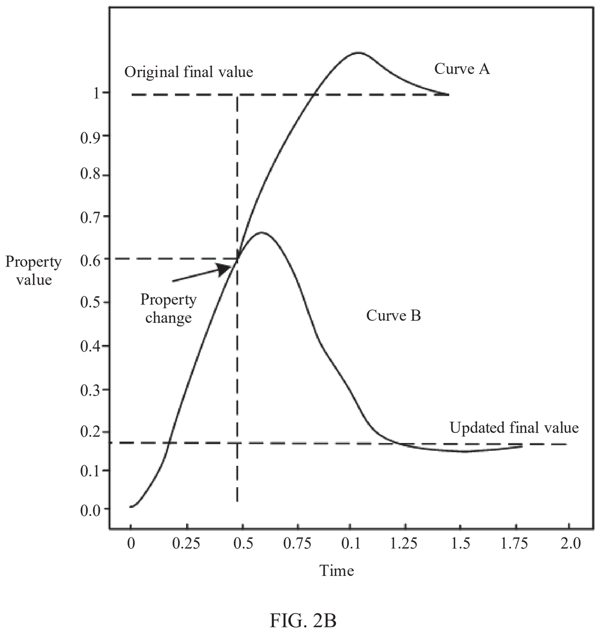

As shown in FIG. 2B, a curve A is a spring curve corresponding to a startup animation played when an application is started. When the startup animation is interrupted before playing ends, a final property value changes. For example, scaleX is 1 when an application window is completely opened, and scaleX of an application icon is 0.17. If the playing of the startup animation of the application ends, scaleX of the application window increases from 0.17 to 1, which is a final value of the curve A shown in FIG. 2B. In other words, a final value of scaleX of the startup animation is 1. It should be understood that the curve A is a spring curve that satisfies the foregoing formula (1). In an application startup scenario, damping of the spring curve may be set to over-damping. In this way, scaleX continuously increases from 0 to 1 over time. When scaleX continuously increases, a value of scaleX does not exceed 1. After the startup animation is interrupted during the playing, a return-to-home animation is played. For example, when scaleX of the application window increases from 0.17 to 0.6, the startup animation is interrupted by a user operation. As shown by a curve B, scaleX continues to increase from 0.6, for example, to 0.65, and then gradually decreases from 0.65. The final property value is 0.17. It should be understood that the curve B is a spring curve that satisfies the foregoing formula (1). In an application startup interruption scenario, damping of the spring curve may be set to underdamping. In this way, as shown by the curve B, scaleX first increases from 0.6 to 0.65 over time, then continuously decreases to 0.15, and finally increases to 0.17. Certainly, the damping of the spring curve may alternatively be set to over-damping. In this case, in the return-to-home animation, scaleX first increases from 0.6 to 0.65 over time, and then continuously decreases to 0.17. When the spring curve is applied to different scenarios, whether the damping of the spring curve is set to over-damping or underdamping is determined based on a specific scenario. This is not limited herein. scaleX is used as an example to describe the animation properties. For animation properties such as scaleY, translateX, translateY, crop left, crop top, crop right, crop bottom, and alpha, refer to scaleX. Details are not described herein. It should be understood that FIG. 2B is described by using scaleX. A range of a property value represented by an ordinate is set to 0 to 1. When the spring curve is applied to another animation property, a range of a property value represented by an ordinate may be 0 to 1 or another range. This is not limited herein.

The curve B may include two parts: the startup animation (referred to as an old spring animation) played before it is interrupted and an exit animation (referred to as a new spring animation) played after the startup animation is interrupted.

An initial velocity $v_0^{new}$ of the new spring animation may be determined by an instantaneous velocity $v^{old}(t)$ of the old spring animation, which is specifically determined through the following formula (2):

$$v_0^{new} = v^{old}(t) = \frac{x(t+\epsilon) - x(t-\epsilon)}{2\epsilon}, \epsilon = 10^{-10} \qquad (2)$$

In the foregoing formula (2), t is a moment at which the old spring animation is interrupted.

An equilibrium position $x_0^{new}$ of the spring animation is updated through the following formula (3), and an initial amplitude $\Delta_x^{new}$ is updated through the following formula (4):

$$x_0^{new} = x^{old}(t) \qquad (3)$$

$$\Delta_x^{new} = x'^{new} - x^{old}(t) \qquad (4)$$

In embodiments of this application, a window property animation engine and a view property animation engine are constructed in the system library. The window animation engine and the view property animation engine are connected to an original animation rendering framework, so that rendering consistency between a window and an original animation can be ensured. Starting an application A is used as an example. The UI thread is configured to obtain page layout information of the application A, and initial property information and final property information of a startup animation of the application A. The initial property information may be property information corresponding to the first frame of image of the startup animation. The final property information is property information corresponding to the last frame of image of the startup animation. The render thread may generate, based on the initial property information and the final property information that are obtained by the UI thread, intermediate property information corresponding to each intermediate image frame between the first frame of image and the last frame of image of the startup animation, perform drawing based on the intermediate property information corresponding to each intermediate image frame, and render a drawn image to obtain image data of each to-be-displayed frame.

The surface flinger is configured to composite layers corresponding to each frame of image after rendering, to obtain each frame of image of a to-be-displayed property animation.

The hardware abstraction layer (HAL) is an interface layer between the application framework layer and the kernel layer. It encapsulates Linux drivers and provides unified interfaces for an upper layer. An upper-layer application does not need to know how lower-layer hardware is implemented, and underlying implementation details are shielded.

The kernel layer may include a hardware driver, configured to drive hardware to work. A driver layer shown in FIG. 2A includes a display driver (display driver), configured to drive the display to display a user interface. Optionally, the kernel layer may further include a sensor driver, a graphics processing unit driver (graphics processing unit driver, GPU driver), and the like. This is not limited in embodiments of this application.

The hardware layer includes hardware in the electronic device. It may be understood that the hardware layer in FIG. 2A includes a display and the like in the following embodiments.

The following describes a display method for an electronic device provided in embodiments of this application with reference to the accompanying drawings. The following embodiments may be combined with each other. Same or similar concepts or processes may not be repeatedly described in some embodiments.

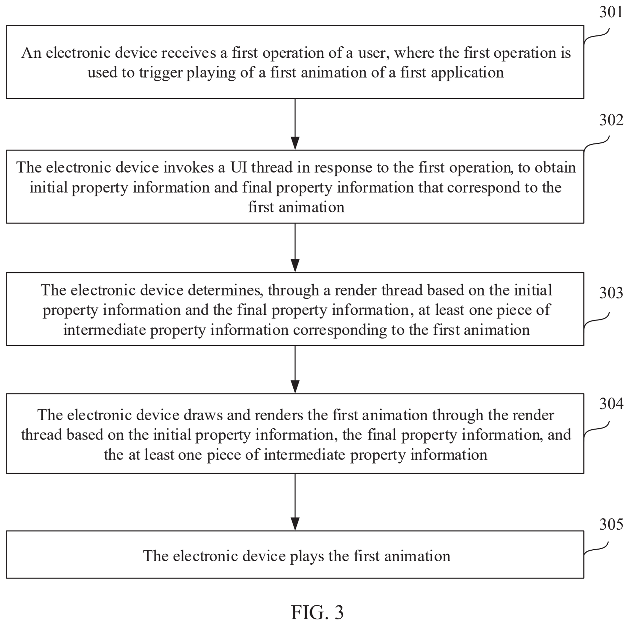

FIG. 3 is a schematic flowchart of a display method for an electronic device according to an embodiment of this application. As shown in FIG. 3, the process may include the following steps.

Step 301: An electronic device receives a first operation of a user. The first operation is used to trigger playing of a first animation of a first application.

For example, the first operation is a tap operation on an icon of the first application. The electronic device receives the tap operation and starts the first application in response to the tap operation. In this example, a phase from receiving, by the application, the tap operation of the user for triggering startup of the first application to displaying a main interface of the first application by the electronic device is referred to as a startup phase of the application. The first animation is a startup animation played in the startup phase of the first application. For example, the startup animation includes M image frames, where M is a positive integer. The startup animation may be that the M image frames are displayed on a user interface of the electronic device in a floating manner based on a preset sequence, window size, display time, display position, transparency, display element, and the like. In the startup animation, sizes of the M image frames gradually increase from a preset minimum size to a preset maximum size. The preset minimum size may be the same as a size of the icon of the application. The preset maximum size may be the same as a size of a display of the electronic device.

For another example, the electronic device displays a user interface of the first application. The user interface of the first application covers an entire display. The first operation in step 301 is a swipe-up operation. The electronic device receives the swipe-up operation and exits the first application in response to the swipe-up operation. In this example, a phase from receiving the swipe-up operation of the user for exiting the application to displaying a home screen by the electronic device is referred to as an exit phase of the application. In this scenario, the first animation is an exit animation played in the exit phase of the first application. For example, the exit animation includes N image frames, where N is a positive integer. The exit animation may be that the N image frames are displayed on a user interface of the electronic device in a floating manner based on a preset sequence, window size, display time, display position, transparency, display element, and the like. In the exit animation, sizes of the N image frames gradually decrease from a preset maximum size to a preset minimum size. The preset maximum size may be the same as a size of the display of the electronic device. The preset minimum size may be the same as a size of the icon of the application.

Step 302: The electronic device invokes a UI thread in response to the first operation, to obtain initial property information and final property information that correspond to the first animation.

The initial property information is property information corresponding to the first image frame of the first animation. The final property information is property information corresponding to the last frame of the first animation. For example, the first animation is a startup animation including M image frames. The first frame of image is the $1^{st}$ image frame in the M image frames. The last frame of image is the $M^{th}$ image frame in the M image frames. (M - 2) image frames other than the first frame of image and the last frame of image may be collectively referred to as intermediate image frames. In this example, (M - 2) intermediate image frames are included, which are the $2^{nd}$ frame of image, $3^{rd}$ frame of image, ..., and (M - 1)$^{th}$ frame of image. M is an integer greater than 1.

Step 303: The electronic device determines, through a render thread based on the initial property information and the final property information, at least one piece of intermediate property information corresponding to the first animation.

At least one intermediate image frame of the first animation other than the first frame of image and the last frame of image each corresponds to one piece of intermediate property information. For example, the first animation includes M frames. The M frames include (M - 2) intermediate image frames. Each intermediate image frame corresponds to one piece of intermediate property information. The (M - 2) intermediate image frames correspond to (M - 2) pieces of intermediate property information.

In embodiments of this application, any one of the initial property information, the intermediate property information, and the final property information may include but is not limited to scaleX, scaleY, translateX, translateY, crop left, crop top, crop right, crop bottom, alpha, and a rounded corner property (cornerRadius).

Step 304: The electronic device draws and renders the first animation through the render thread based on the initial property information, the final property information, and the at least one piece of intermediate property information.

After step 304 is completed, the electronic device may obtain M image frames corresponding to the first animation. Then, step 305 may be performed.

Optionally, layers corresponding to each image frame are obtained after rendering. The first electronic device may further composite the layers corresponding to each image frame to obtain each image frame, and then perform step 305 based on the obtained M image frames.

Step 305: The electronic device plays the first animation.

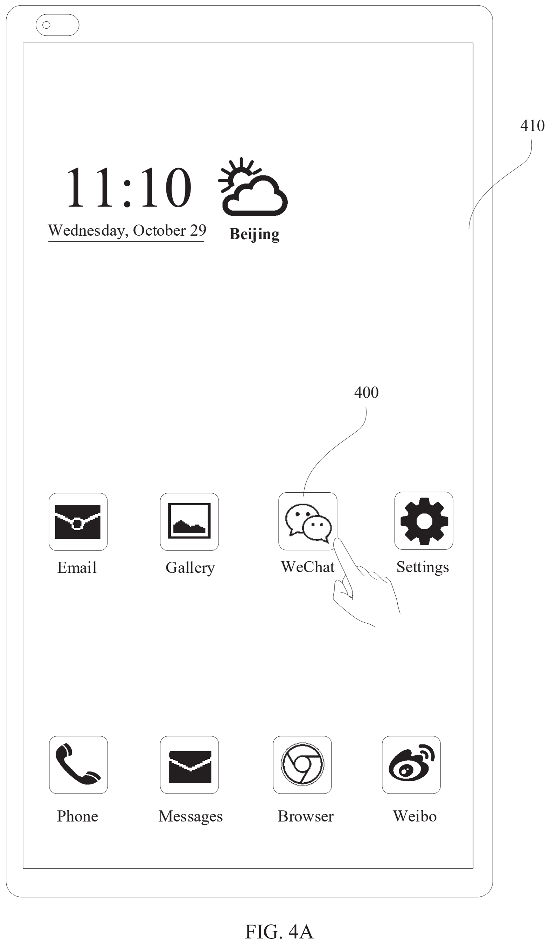

The following uses a WeChat startup scenario as an example for description. FIG. 4A is an example of a diagram of a home screen.

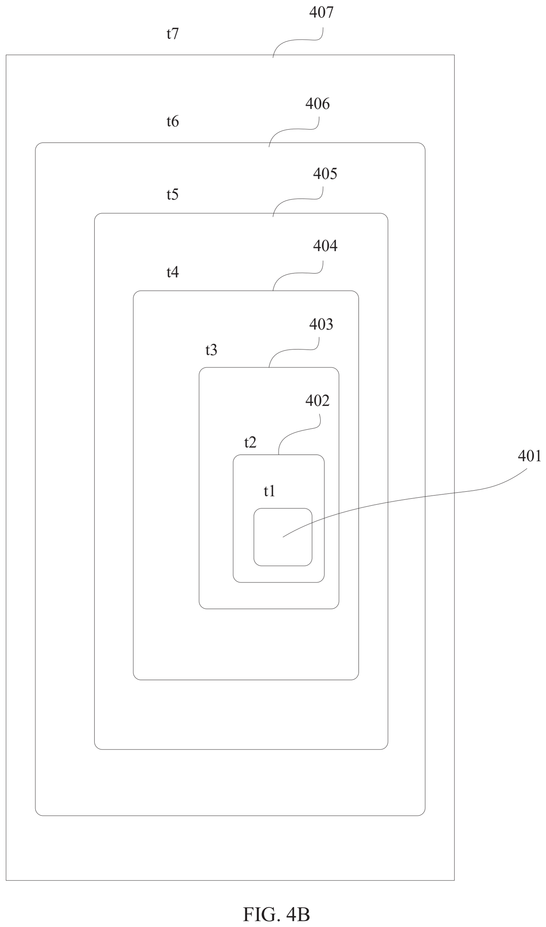

As shown in FIG. 4A, the electronic device displays a home screen 410. The home screen includes icons of applications, for example, an icon 400 of WeChat shown in FIG. 4A. At a moment t1, the electronic device receives a tap operation on the icon 400 of WeChat. The electronic device starts WeChat in response to the tap operation, and plays a startup animation of WeChat. The startup animation includes a plurality of image frames. In a process of playing the startup animation, the image frames that are sequentially played may show that a window size of WeChat gradually increases. The first image frame is the icon 400 of WeChat shown in FIG. 4A. As shown in FIG. 4B, a size of the first image frame 401 at the moment t1 is the same as a size of the icon 400 of WeChat. An original window size (namely, the size of the icon 400) of the application may be referred to as a preset minimum size.

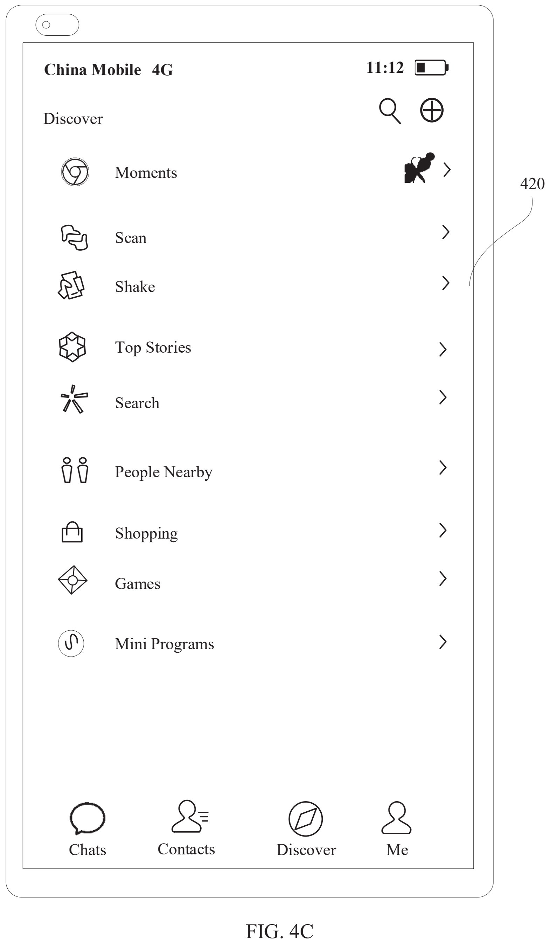

Then, as shown in FIG. 4B, the window size of WeChat gradually increases. In the startup animation, the first image frame 401 gradually becomes larger from the preset minimum size to an image frame 402 at a moment t2. Then, the window size of WeChat continues to increase, for example, gradually increases from the image frame 402 to an image frame 403 at a moment t3. Then, the window size of WeChat continues to increase, for example, gradually increases from the image frame 403 to an image frame 404 at a moment t4. Then, the window size of WeChat continues to increase, for example, gradually increases from the image frame 404 to an image frame 405 at a moment t5. Then, the window size of WeChat continues to increase, for example, gradually increases from the image frame 405 to an image frame 406 at a moment t6. At a moment t7, the window size of WeChat changes to a preset maximum size, for example, gradually increases from the image frame 406 to an image frame 407. The preset maximum size is the same as a size of a display region of a display, namely, full-screen displaying. The image frame 407 is a user interface 420 of WeChat shown in FIG. 4C.

It should be understood that no element may be displayed in image content of the image frames 401 to 407, or one or more elements may be displayed. This is not limited in this application. During startup of the application, the electronic device may play the startup animation in a startup phase of the application. The startup animation includes a plurality of image frames. Display positions and sizes of the image frames may be different. In the startup animation, the electronic device sequentially displays the image frames 401 to 407.

In FIG. 4A and FIG. 4B, only a window animation of WeChat in a process of starting WeChat is described. During startup of WeChat, the electronic device further plays a view animation. The view animation may be a background animation other than a window of WeChat. The background animation becomes smaller during the startup of WeChat. Property values of the view animation mainly include but are not limited to scaleX and scaleY. For example, the property value scaleX is scaled down from 1.0 to 70% of an original value $X_0$. The property value scaleY is scaled down from 1.0 to 70% of an original value $Y_0$. It should be understood that in a WeChat exit scenario, the electronic device plays a view animation in addition to an exit animation of the window of WeChat. In this scenario, a property value of the view animation gradually increases. If the view animation is interrupted in the exit scenario, the property value of the view animation first increases and then decreases. A principle is similar to that of the exit animation, and details are not described below.

In some other embodiments, before the first application has been started and the interface of the application is displayed, the electronic device receives a second operation. The second operation is, for example, a swipe-up operation. The swipe-up operation is used to trigger playing of a second animation. In other words, before the first animation has been played, the second operation interrupts the playing of the first animation. After the first animation is interrupted, for example, when the $i^{th}$ image frame of the first animation is played, the electronic device receives the second operation, and then the electronic device plays the second animation. This implements an animation interruptibility mechanism and eliminates a need to wait for the first animation to be played before playing the second animation, so that user experience can be improved. Initial property information of the second animation may be property information corresponding to the $i^{th}$ image frame of the first animation. The electronic device may determine a specific scenario based on a swipe distance of the swipe-up operation on the display. For example, if the swipe distance is less than a preset threshold, the second animation is a hand-following animation. If the swipe distance is greater than or equal to the preset threshold, the second animation is a return-to-home (HOME) animation.

In embodiments of this application, property information corresponding to the M image frames of the first animation and property information corresponding to N image frames of the second animation conform to a spring curve, so that smooth transition from the first animation to the second animation can be implemented.

In some implementations, an animation leash corresponding to the second animation is the same as an animation leash corresponding to the first animation. The first animation and the second animation are animations drawn through the same animation leash. Therefore, the first animation and the second animation belong to a same animation, and unnatural transition from the first animation to the second animation does not occur.

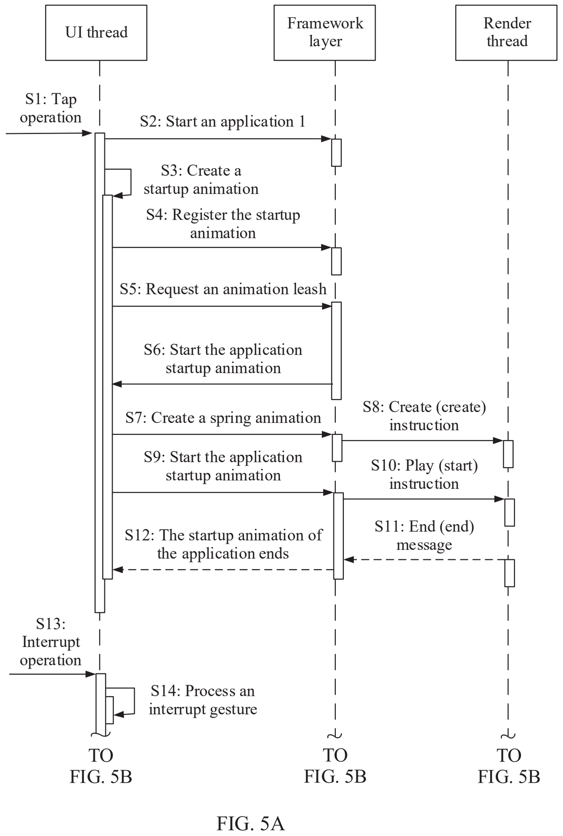

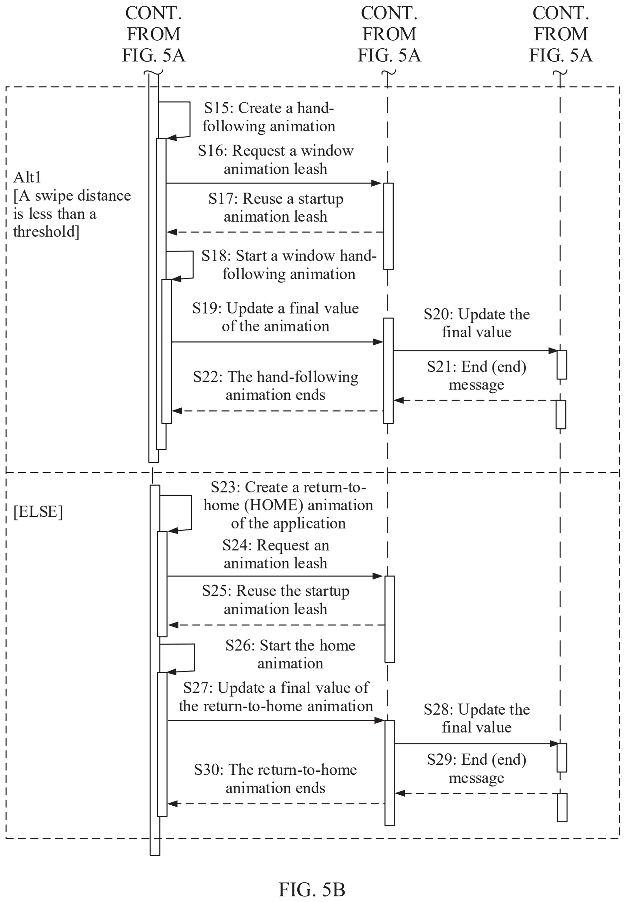

FIG. 5A and FIG. 5B are an example of a sequence diagram of interruptible application startup. As shown in FIG. 5A and FIG. 5B, the sequence diagram includes the following steps.

S1: A UI thread receives an operation on an application 1.

For example, the operation on the application 1 may be a tap operation. A user taps an icon of the application 1. The electronic device receives the tap operation and starts the application 1 in response to the tap operation.

S2: The UI thread notifies a framework to start the application 1.

S3: The UI thread creates a startup animation.

S4: The UI thread registers the startup animation with the framework.

S5: The UI thread requests an animation leash from the framework.

Correspondingly, after receiving the request, the framework prepares to start making the startup animation and creates a startup animation leash. The UI may control property information of each image frame in the startup animation through the startup animation leash.

S6: The framework notifies the UI thread to start the application startup animation.

S7: The UI thread notifies the framework to create a spring animation.

S8: The framework sends a create (create) instruction to a render thread.

The create instruction instructs the render thread to create the spring animation. Correspondingly, after receiving the create instruction, the render thread computes a property of the spring animation, and performs drawing and rendering based on a computing result to obtain M image frames.

The UI thread obtains initial property information of an image frame in the startup animation, and computes intermediate property information of a next image frame based on the initial property information. In this way, intermediate property information of all image frames in the startup animation is computed.

S9: The UI thread sends a play (start) instruction to the framework. The start instruction instructs to start to play the application startup animation.

S10: The framework sends the start instruction to the render thread.

Correspondingly, after receiving the start instruction, the render thread sends, to a display for playing, the M image frames obtained through rendering, and performs S11 after the playing ends.

S11: After the playing of the startup animation ends, the render thread sends an end (end) message to the framework.

The end message is used to notify the UI thread that the playing of the application startup animation ends.

S12: The framework notifies the UI thread that the playing of the application startup animation ends.

For example, the electronic device displays the home screen shown in FIG. 4A, and receives the tap operation on the icon 400 of WeChat. The startup animation of WeChat includes the image frames at the moments t1 to t7. These image frames are played in the following sequence: the image frame 401 at the moment t1, the image frame 402 at the moment t2, the image frame 403 at the moment t3, the image frame 404 at the moment t4, the image frame 405 at the moment t5, the image frame 406 at the moment t6, and the image frame 407 at the moment t7.

Before the playing of the startup animation ends, the electronic device receives an interrupt operation for interrupting the startup animation, for example, a swipe-up operation, and the startup animation is interrupted. The electronic device may determine a scenario based on the swipe-up operation, and then play a corresponding animation.

S13: The UI thread receives an interrupt operation.

S14: The UI thread processes an interrupt gesture.

For example, when the interrupt operation is a swipe-up operation, the UI thread may determine a swipe distance corresponding to the swipe-up operation. If the swipe distance is less than a threshold, S15 to S22 are performed. If the swipe distance is greater than or equal to the threshold, S23 to S30 are performed.

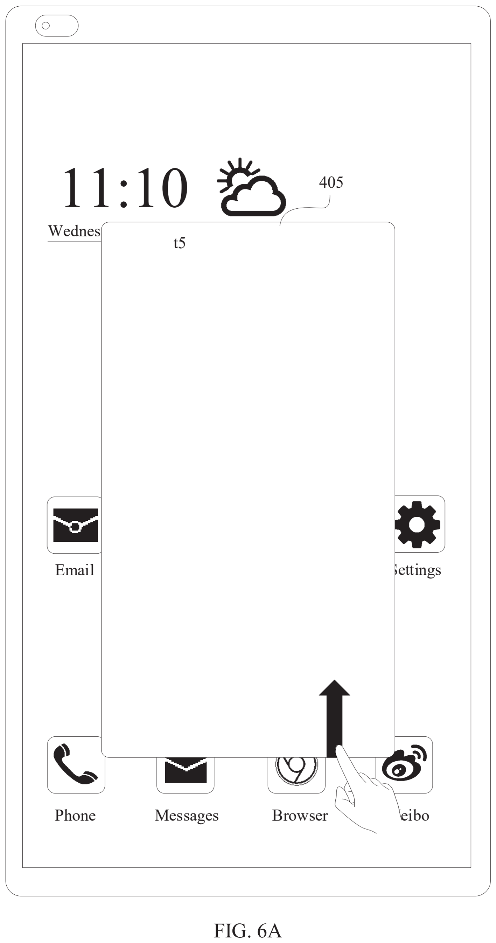

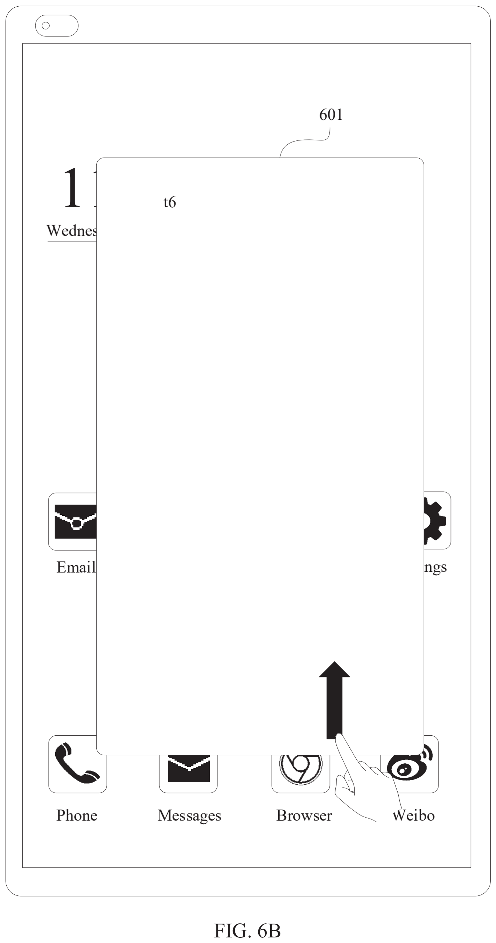

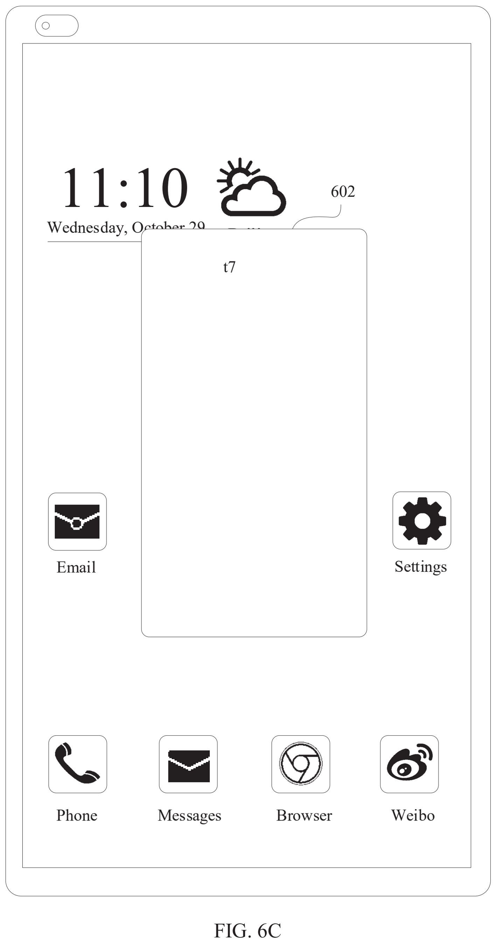

For example, the startup animation of WeChat is played from the size of the icon at the moment t1 to the image frame 405 at the moment t5, and the swipe-up operation is received. In this case, the electronic device displays a user interface shown in FIG. 6A. If the swipe distance of the swipe-up operation is less than the threshold, it is determined that the scenario is a hand-following scenario, and an image frame 601 is displayed at the next moment t6 of the moment t5. A size of the image frame 601 at the moment t6 may be greater than that of the image frame 405 at the moment t5. In this case, the electronic device displays a user interface shown in FIG. 6B. Then, the size of the image frame 601 decreases. An image frame 602 is displayed at the moment t7. In this case, the electronic device displays a user interface shown in FIG. 6C. Then, the image frame 602 moves with the user's finger as the user's finger slides. For example, the image frame 602 is also displayed at the next moment t8 of the moment t7, but a position of the image frame 602 displayed at the moment t7 is different from that of the image frame 602 displayed at the moment t8. The image frame 602 moves with the user's finger until the user's finger leaves the display.

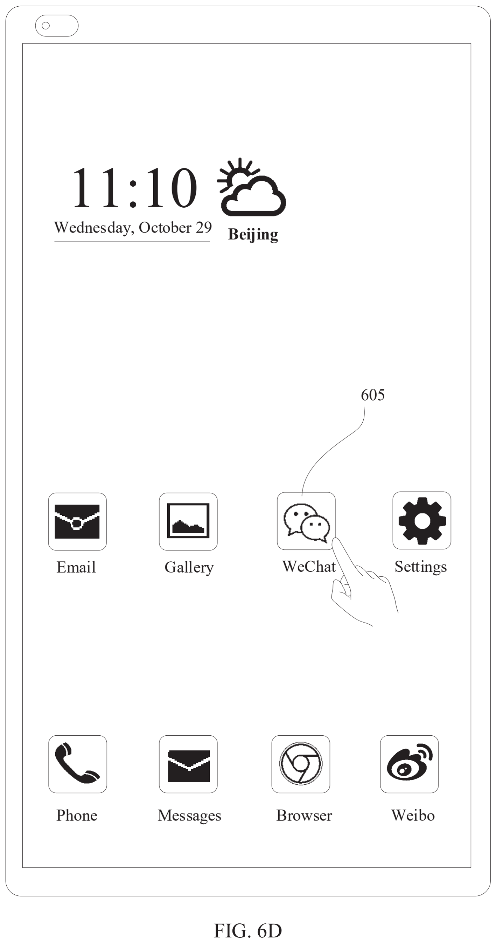

When the user's finger leaves the display, the return-to-home animation starts to be played. For example, the finger leaves the display at the moment t8. The first frame of the return-to-home animation is the image frame 602 at the moment t8, and the last frame is an image frame 605 shown in FIG. 6D. Content displayed in the image frame 605 is the icon of WeChat.

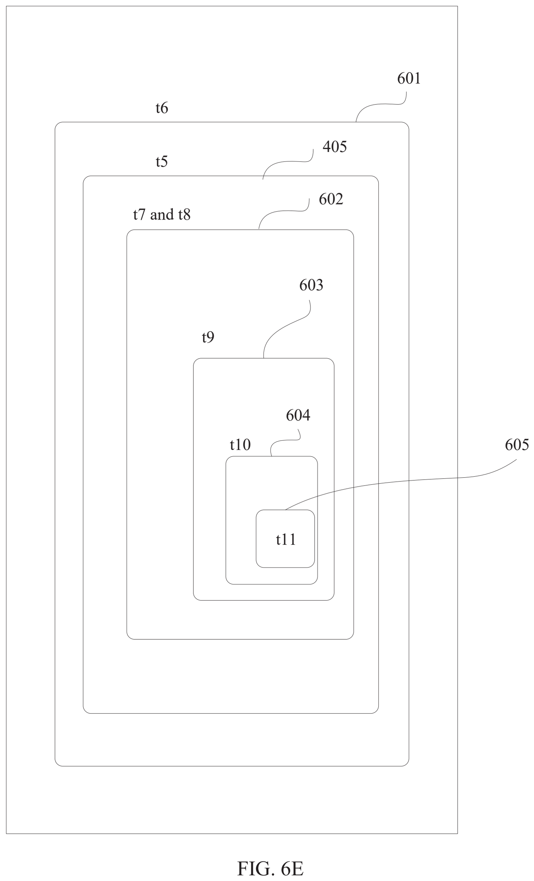

As shown in FIG. 6E, image frames in the hand-following animation are played in the following sequence: the image frame 405 at the moment t5, the image frame 601 at the moment t6, the image frame 602 at the moment t7, and the image frame 602 at the moment t8.

Image frames in the return-to-home animation are played in the following sequence: the image frame 602 at the moment t8, an image frame 603 at a moment t9, an image frame 604 at a moment t10, and the image frame 605 at a moment t11. When the user's finger leaves the display, an animation velocity conforms to the curve B shown in FIG. 2B. The velocity does not abruptly change at a moment when the finger leaves the display. A hand-following spring is smoothly connected to a hand-leaving spring. The animation velocity inherits a hand velocity at the moment when the finger leaves the display, and continues to increase and then decreases smoothly.

It should be understood that no element may be displayed in image content of the image frames 601 to 605, or one or more elements may be displayed. This is not limited in this application.

S15: The UI thread creates a hand- following animation.

S16: The UI thread requests a window animation leash from the framework.

S17: The framework notifies the UI thread to reuse the startup animation leash.

S18: The UI thread starts the window hand-following animation.

S19: The UI thread notifies the framework to update a final value of the animation.

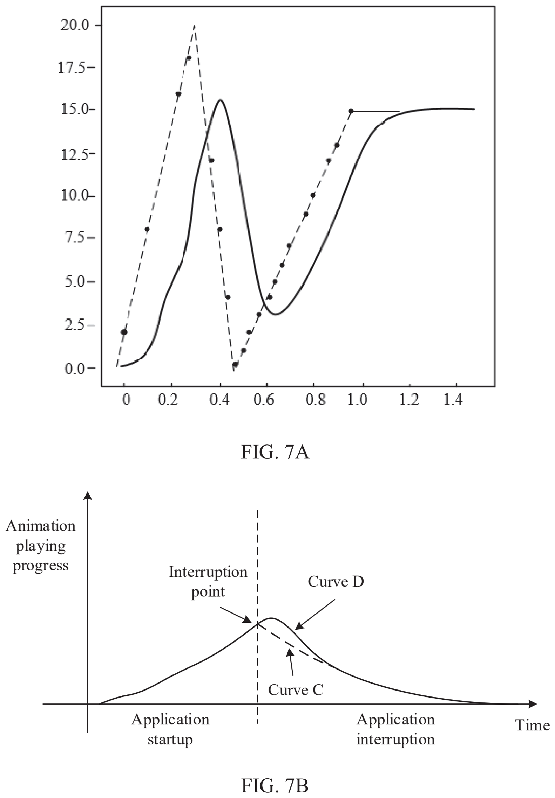

As shown in FIG. 7A, a dashed line is a fitted curve of a series of reported TPs in a hand-following phase, and a solid line is a curve of a window movement track of the application, which is smoother than the fitted curve.

S20: The framework notifies the render thread to update the final value (updateFinalValue).

After updating the final value of the animation, the render thread computes the hand-following animation, performs drawing and rendering based on a computing result to obtain frames corresponding to the hand-following animation, sends the image frames to the display for playing, and performs S21 after the playing ends.

For example, nine animation properties need to be computed for the hand-following animation: scaleX and scaleY of scaling (scale) properties, translateX and translateY of translation (translate) properties, crop left, crop top, crop right, and crop bottom of cropping (crop) properties, and a transparency (alpha) property. Each animation property conforms to a spring curve shown in FIG. 7B. When the hand-following animation is played, the nine animation properties simultaneously start and may end at different times. scaleX is used as an example for description. A maximum value of scaleX is 1. As shown in FIG. 7B, a startup animation is played in an application startup phase. For example, the startup animation is interrupted when it is played until scaleX is 0.6. Then, as shown by a curve D in FIG. 7B, scaleX first increases and then decreases for smooth transition, instead of directly decreasing at an interruption point in the conventional technology (as shown by a curve C). In embodiments of this application, each property changes according to the curve D. This can improve animation smoothness.

S21: The render thread sends an end (end) message to the framework.

S22: The framework notifies the UI thread that the hand-following animation ends.

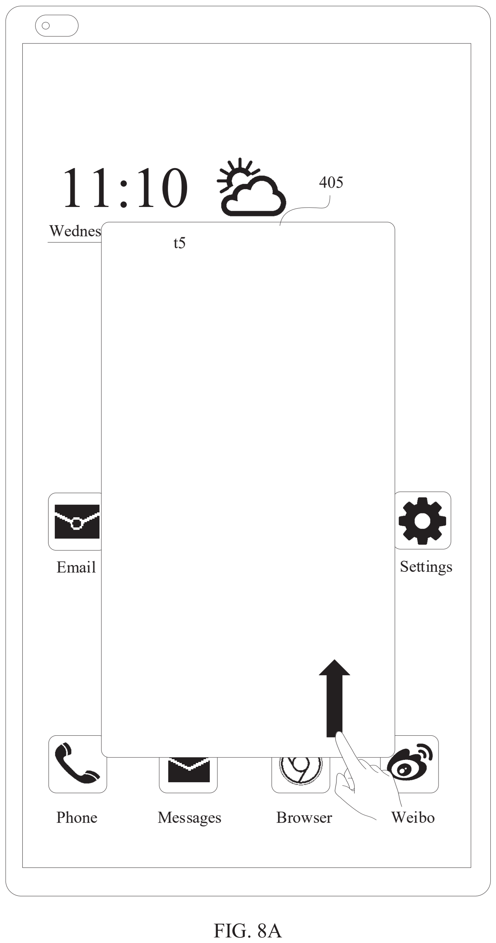

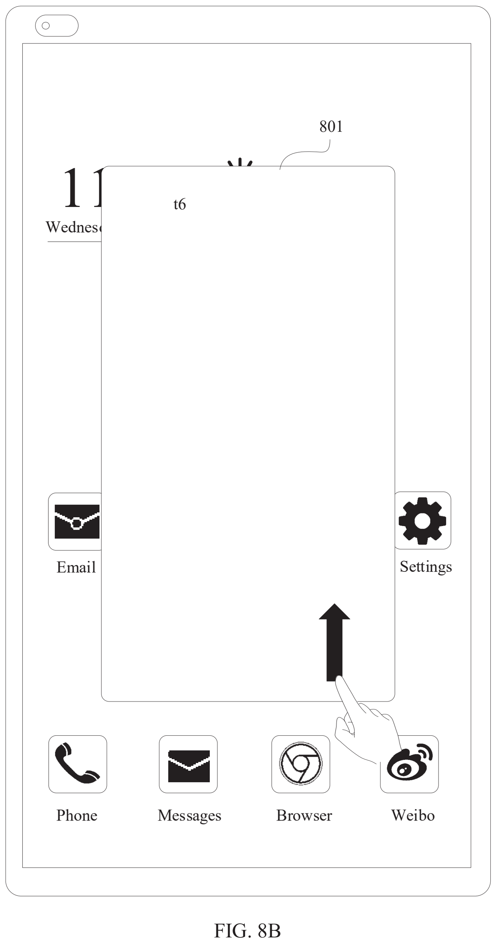

For example, when the startup animation of WeChat is played to the image frame 405 at the moment t5 shown in FIG. 8A, the interrupt operation is received. For example, the interrupt operation is a swipe-up operation. The image frame 405 moves with the user's finger as the user's finger slides. For example, an image frame 801 is displayed at the moment t6. In this case, the electronic device displays a user interface shown in FIG. 8B. The image frame 801 at the moment t6 and the image frame 405 at the moment t5 may have a same size, but may be displayed at different positions of the display. For example, when the interrupt operation is a swipe-up operation and a swipe distance of the swipe-up operation is greater than or equal to a threshold, it indicates an application exit scenario. Therefore, a return-to-home (HOME) animation needs to be played.

S23: The UI thread creates a return-to-home animation of the application.

S24: The UI thread requests an animation leash from the framework.

S25: The framework notifies the UI thread to reuse the startup animation leash.

S26: The UI thread starts the home animation.

S27: The UI thread notifies the framework to update a final value of the return-to-home animation.

S28: The framework notifies the render thread to update the final value (updateFinalValue).

After updating the final value of the animation, the render thread computes the return-to-home animation, performs drawing and rendering based on a computing result to obtain a plurality of image frames corresponding to the return-to-home animation, sends the plurality of image frames to the display for playing, and performs S29 after the playing ends.

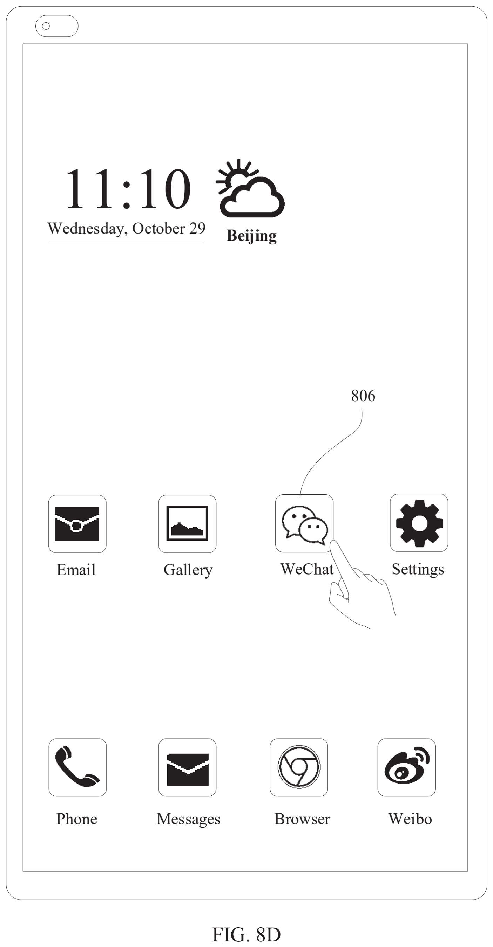

The user's finger leaves the display at the moment t6. The first image frame of the return-to-home animation is the image frame 801 in the user interface shown in FIG. 8B, and the last frame is an image frame 806 in a user interface shown in FIG. 8D.

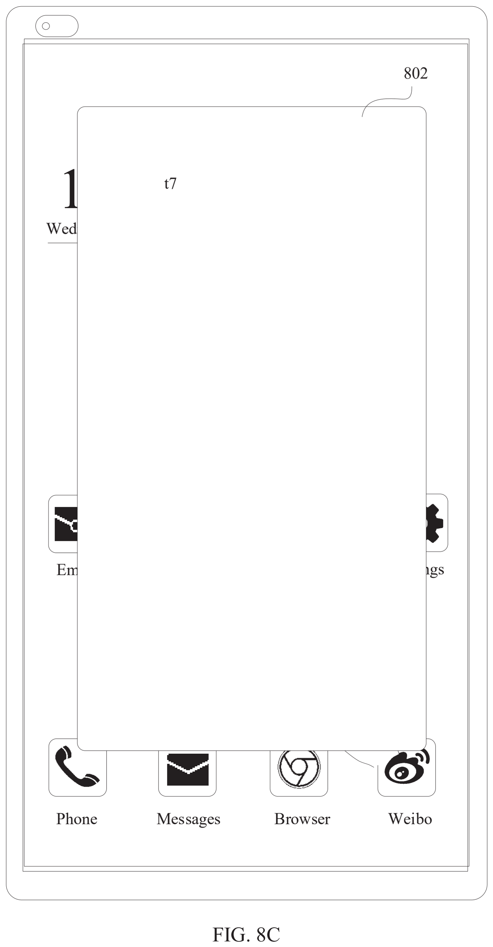

The size of the image frame in the return-to-home animation played after the finger leaves the display may first increase and then decrease. For example, in a user interface shown in FIG. 8C, an image frame 802 is displayed at the moment t7. A size of the image frame 802 may be larger than that of the image frame 801 at the moment t6.

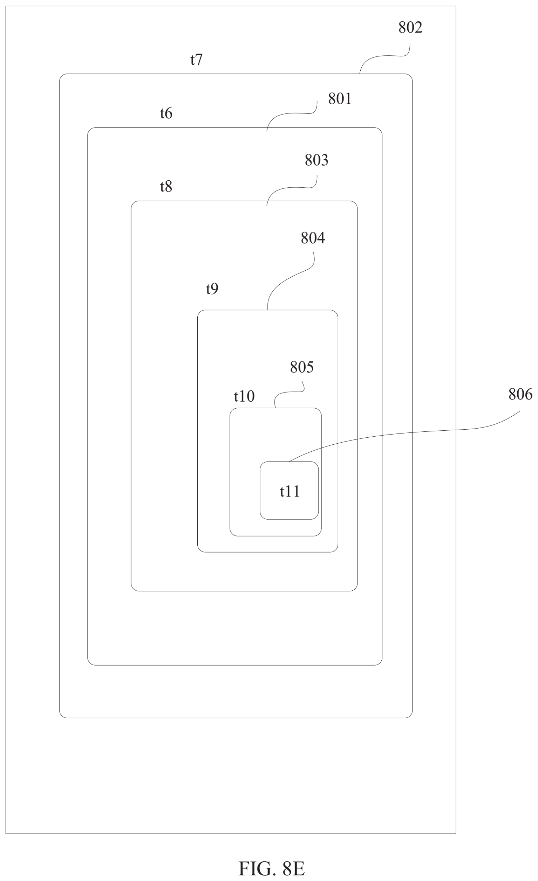

For example, as shown in FIG. 8E, the animation played after the user's finger leaves the display includes the following frames in sequence: the image frame 801 at the moment t6, the image frame 802 at the moment t7, an image frame 803 at the moment t8, an image frame 804 at the moment t9, an image frame 805 at the moment t10, and the image frame 806 at the moment t11. It should be understood that no element may be displayed in image content of the image frames 801 to 806, or one or more elements may be displayed. This is not limited in this application.

S29: The render thread sends an end (end) message to the framework.

S30: The framework notifies the UI thread that the return-to-home animation ends.

In the foregoing example, the startup animation, the hand-following animation, and the exit animation of the application share the same window animation leash. Therefore, the startup animation and each of the hand-following animation and exit animation belong to a same animation, and unnatural transition from the startup animation to the hand-following animation or exit animation does not occur, leading to good animation smoothness.

In some other embodiments, when the first application has been started and the electronic device displays the interface of the first application, the electronic device receives a third operation. The third operation is, for example, a swipe-up operation. The swipe-up operation is used to trigger playing of a third animation. In other words, the first application needs to be exited, and the third animation is an exit animation. Then, the electronic device receives a fourth operation. The fourth operation is used to trigger playing of a fourth animation. For example, the fourth operation is a tap operation on a second application. If the tap operation is received after the playing of the exit animation of the first application ends, a startup animation of the second application is played based on the tap operation. If the tap operation is received before the playing of the exit animation of the first application ends, the electronic device may play a return-to-home animation based on the tap operation. The second application and the first application may be a same application or different applications.

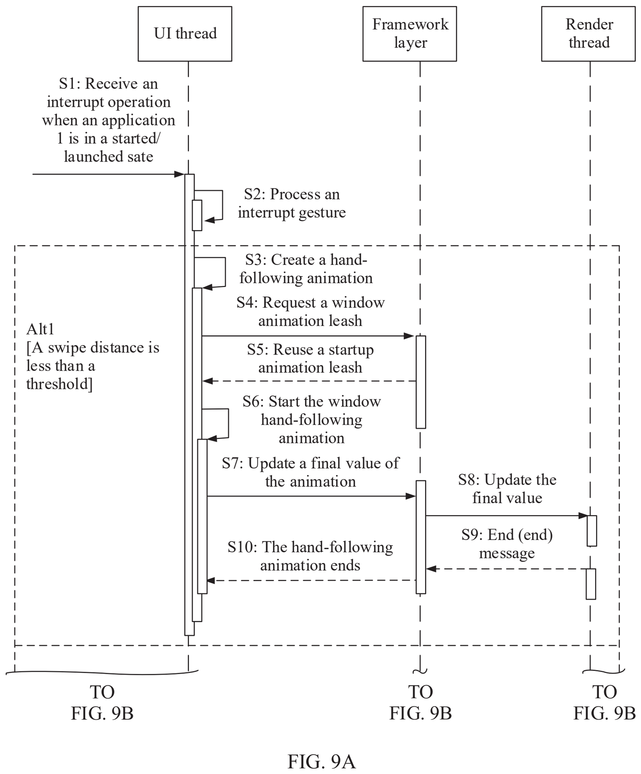

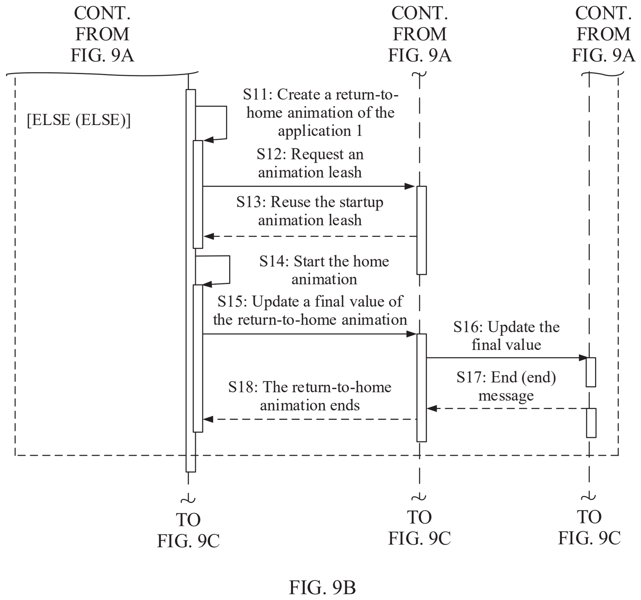

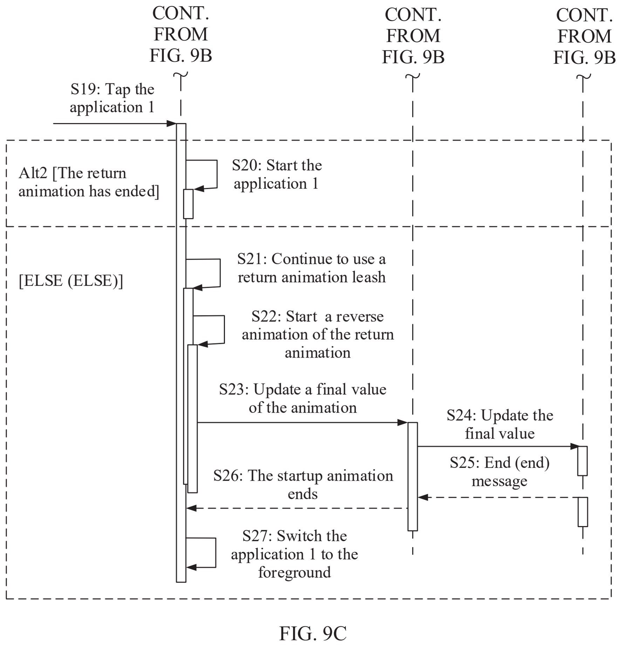

FIG. 9A to FIG. 9C are an example of a sequence diagram of interruptible application exit. As shown in FIG. 9A to FIG. 9C, the sequence diagram includes the following steps.

S1: Receive an interrupt operation when an application 1 is in a started/launched state.

S2: A UI thread processes an interrupt gesture.

For example, when the interrupt operation is a swipe-up operation, the UI thread may determine a swipe distance corresponding to the swipe-up operation. If the swipe distance is less than a threshold, S15 to S22 are performed. If the swipe distance is greater than or equal to the threshold, S23 to S30 are performed.

S3: The UI thread creates a hand-following animation.

S4: The UI thread requests a window animation leash from a framework.

S5: The framework notifies the UI thread to reuse a startup animation leash.

S6: The UI thread starts the window hand-following animation.

S7: The UI thread notifies the framework to update a final value of the animation.

S8: The framework notifies a render thread to update the final value (updateFinalValue).

S9: The render thread sends an end (end) message to the framework.

S10: The framework notifies the UI thread that the hand-following animation ends.

S11: The UI thread creates a return-to-home (HOME) animation of the application.

S12: The UI thread requests an animation leash from the framework.

S13: The framework notifies the UI thread to reuse the startup animation leash.

S14: The UI thread starts the home animation.

S15: The UI thread notifies the framework to update a final value of the return-to-home animation.

S16: The framework notifies the render thread to update the final value (updateFinalValue).

After updating the final value of the animation, the render thread computes the return-to-home animation, performs drawing and rendering based on a computing result to obtain K image frames corresponding to the return-to-home animation, sends the K image frames to the display for playing, and performs S17 after the playing ends.

S17: The render thread sends an end (end) message to the framework.

S18: The framework notifies the UI thread that the return-to-home animation ends.

For S2 to S18, refer to related descriptions of S14 to S30 in FIG. 5A and FIG. 5B. Details are not described herein again.

S19: The electronic device receives a tap operation on the application 1.

If the playing of the return-to-home animation has ended when the tap operation is received, S20 is performed in response to the tap operation. If the playing of the return-to-home animation has not ended when the tap operation is received, S21 to S26 are performed in response to the tap operation.

S20: Start the application 1.

For a procedure of starting the application 1 in S20, refer to S1 to S15 in FIG. 5A and FIG. 5B. Details are not described herein again.

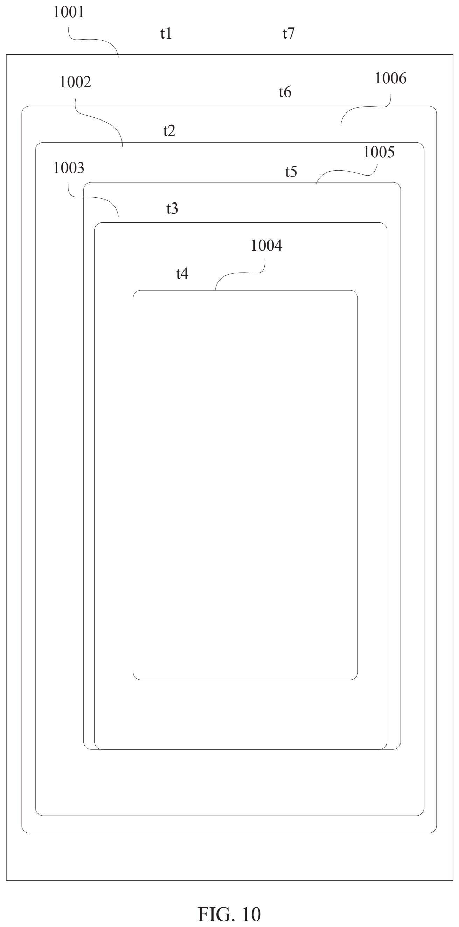

In a process of the return-to-home animation, as shown in FIG. 10, for example, the electronic device sequentially displays an image frame 1001 at a moment t1, an image frame 1002 at a moment t2, and an image frame 1003 at a moment t3. When the image frame 1003 at the moment t3 is played, the tap operation is received. In this case, the return-to-home animation is interrupted, and then a reverse animation of the return-to-home animation is played until the electronic device displays an interface of the application 1.

S21: The UI thread continues to use a return animation leash.

S22: The UI thread starts the reverse animation of the return animation.

Sizes of image frames included in the reverse animation first decrease and then increase until the user interface of the application 1 is displayed in full screen. As shown in FIG. 10, the reverse animation is played in the following sequence: the image frame 1003 at the moment t3, an image frame 1004 at a moment t4, an image frame 1005 at a moment t5, an image frame 1006 at a moment t6, and an image frame 1001 at a moment t7.

S23: The UI thread notifies the framework to update a final value of the animation.

S24: The framework notifies the render thread to update the final value (updateFinalValue).

S25: The render thread sends an end (end) message to the framework.

S26: The framework notifies the UI thread that the startup animation ends.

S27: The application 1 is switched to the foreground.

In the foregoing example, the return-to-home animation of the application and the reverse animation of the return-to-home animation reuse the startup animation leash. Therefore, the return-to-home animation and the reverse animation of the return-to-home animation belong to a same animation, and unnatural transition from the return-to-home animation to the reverse animation of the return-to-home animation does not occur, leading to good animation smoothness.

In addition to the foregoing startup and exit scenarios for an application, embodiments of this application are applicable to startup and exit scenarios for a card, a folder, a plug-in, a split-screen combination icon, and the like. After an animation is interrupted, smooth transition can be achieved for a property value, to improve animation smoothness. In addition, embodiments of this application may be further applied to a rotation scenario of switching between landscape and portrait modes, a scenario of switching between folded and unfolded states of a foldable display, and a scenario of switching between inner and outer screens. Embodiments of this application may be further applied to another scenario involving animation switching or animation transition.

The following describes an animation process in a scenario of switching between folded and unfolded states of a foldable display.

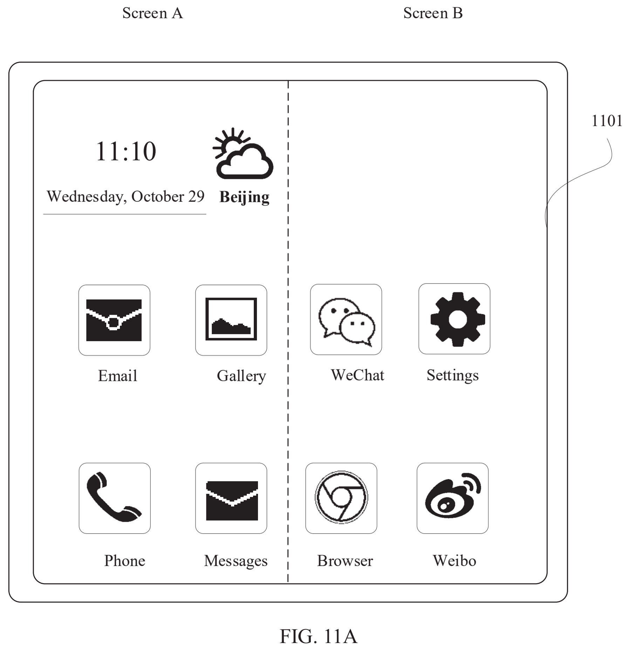

FIG. 11A to FIG. 11E are diagrams of a change in a user interface of an electronic device in a folding process of an inward foldable display from the unfolded state to an intermediate state and then the folded state.

As shown in FIG. 11A, the electronic device is unfolded and displays a user interface 1101 in full screen. The user interface 1101 may be the first frame of image in a first animation, namely, a first interface displayed when the inward foldable display is unfolded. The user interface 1101 includes a plurality of elements. The elements may be one or more of icons of a plurality of applications, desktop widgets, a large folder, a status bar, a page indicator, a wallpaper picture, and the like. For example, the user interface 1101 shown in FIG. 11A includes icons of applications such as Email, Gallery, WeChat, Settings, Phone, Messages, Browser, and Weibo. The desktop widgets may include a date widget (for example, Wednesday, October 29), a time widget (for example, 11:10), and a weather widget (for example, 10°C in Beijing).

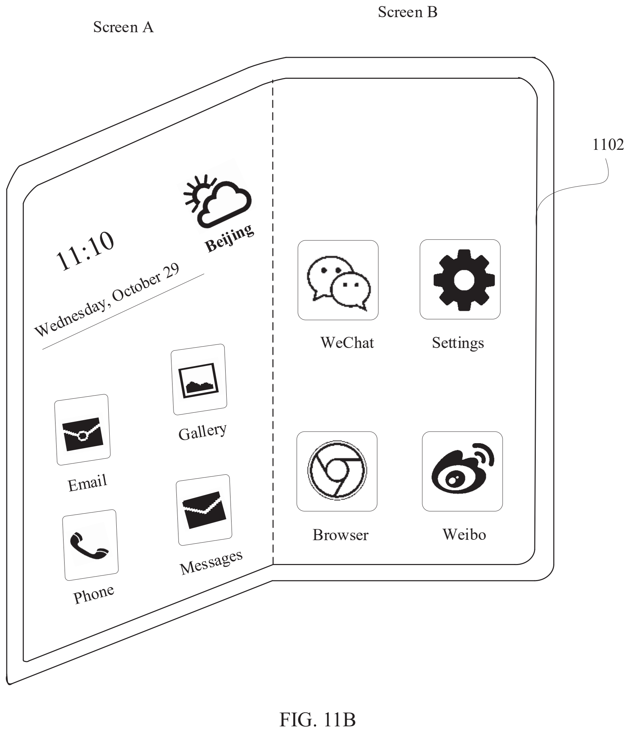

As shown in FIG. 11B, the electronic device receives a user operation, so that screens A and B of the inward foldable display start to fold toward each other. The electronic device continues to play the first animation. That is, the electronic device begins controlling elements displayed on the screens A and B to start being translated in a first direction. The electronic device displays a user interface 1102 shown in FIG. 11B. The user interface 1102 may be the second frame of image in the first animation. A difference between the user interface 1102 and the user interface 1101 lies in that a display position of each element in the user interface 1102 is different from that of each element in the user interface 1101. The icon of Email is used as an example for description. In the first frame of image, a display position of the icon of Email is A. The electronic device translates the display position of the icon of Email for a specific distance, to obtain a display position of the icon of Email in the second frame of image. In the second frame of image, the display position of the icon of Email is B. In other words, a display position of the icon of Email in the user interface 1102 is B. The position B is different from the position A.

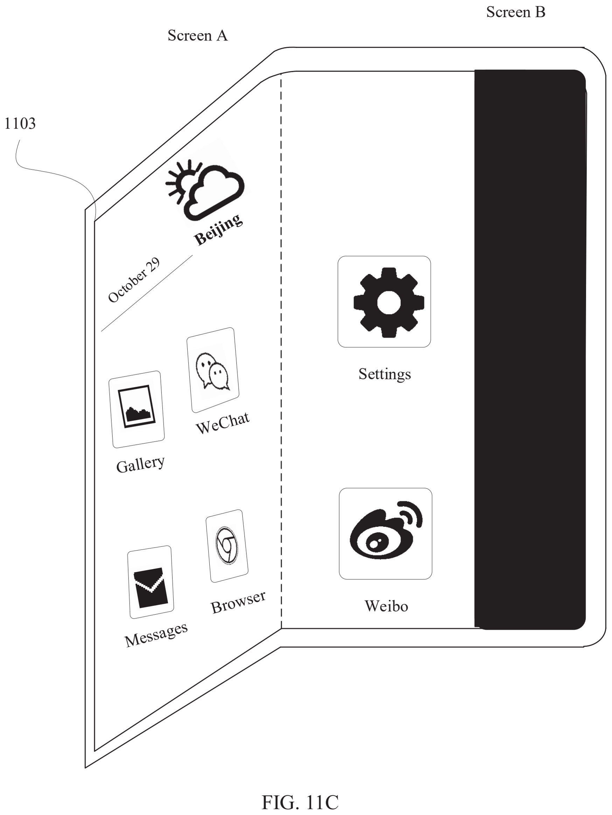

As shown in FIG. 11C, the electronic device receives a user operation, so that the screens A and B of the inward foldable display continue to fold toward each other. An included angle between the screens A and B shown in FIG. 11C is less than an included angle between the screens A and B shown in FIG. 11B. The electronic device continues to play the first animation. That is, the electronic device begins controlling the elements displayed on the screens A and B to continue being translated in the first direction. The electronic device displays a user interface 1103 shown in FIG. 11C. The user interface 1103 may be the third frame of image in the first animation. A difference between the user interface 1103 and the user interface 1102 lies in that a display position of each element in the user interface 1103 is different from that of each element in the user interface 1102, and a quantity of elements displayed in the user interface 1103 is less than a quantity of elements displayed in the user interface 1102. The icon of Email is used as an example for description. In the second frame of image, the display position of the icon of Email is B. The electronic device translates the display position of the icon of Email for a specific distance, to obtain a display position of the icon of Email in the third frame of image. In the third frame of image, the icon of Email is invisible. The wallpaper picture also starts to be translated in the first direction. In this case, the electronic device displays a black region shown in FIG. 11C at a right edge of the screen B. Optionally, a width of the black region may be the same as a distance for which the wallpaper picture is translated in the first direction.

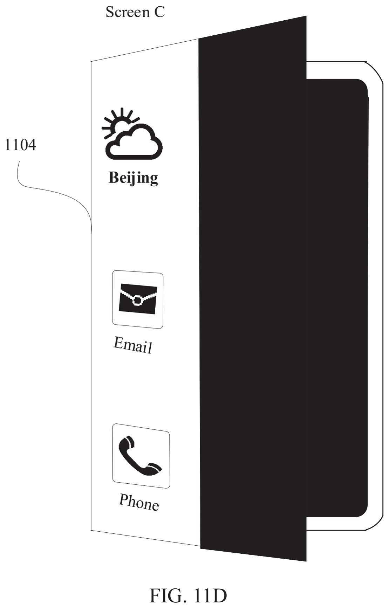

As shown in FIG. 11D, the electronic device receives a user operation, so that the screens A and B of the inward foldable display continue to fold toward each other. An included angle between the screens A and B shown in FIG. 11D is less than the included angle between the screens A and B shown in FIG. 11C. When the included angle between the screens A and B is greater than a preset angle, the electronic device 100 starts to obtain interface layout information of a second interface, and draws an outer screen animation based on the interface layout information of the second interface, playing duration of the outer screen animation, and an animation curve. The electronic device starts to play the outer screen animation on an outer screen. A user interface 1104 may be the first animation frame in the outer screen animation. The wallpaper picture also starts to be translated in a second direction. In this case, the electronic device displays a black region shown in FIG. 11D at a right edge of a screen C.

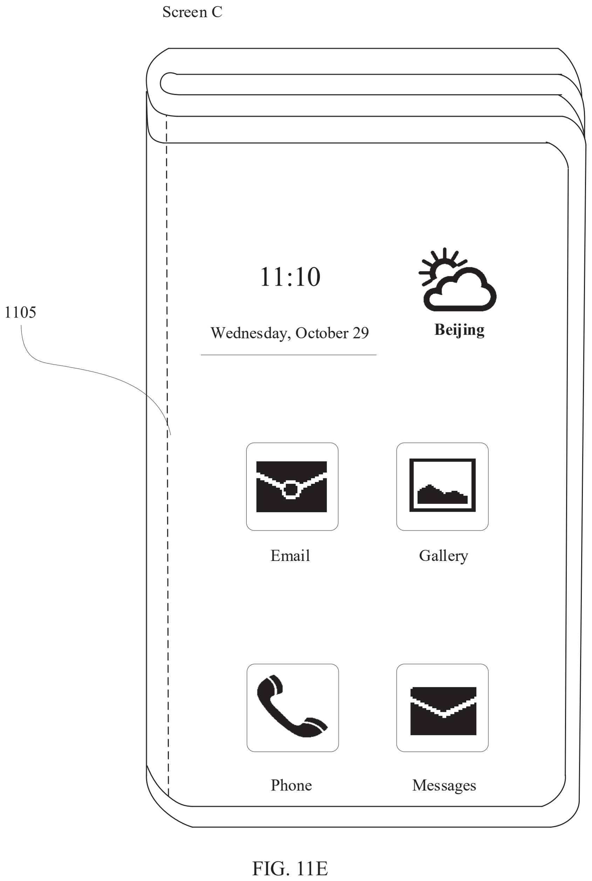

As shown in FIG. 11E, the electronic device receives a user operation, so that the screens A and B of the inward foldable display continue to fold toward each other. The electronic device is folded and displays a user interface 1105 on the screen C. In this case, the screens A and B of the electronic device are hidden and invisible. The user interface 1105 is similar to an interface displayed on the screen A in FIG. 11A. The user interface 1105 may be the last animation frame in the first animation, namely, the second interface displayed when the inward foldable display is folded.

A second animation is played if the folding process is interrupted and the inward foldable display returns to the unfolded state, for example, if an operation of unfolding the foldable display is detected when the electronic device is being folded to a state shown in FIG. 11C. The user interface 1103 may be the first frame of image in the second animation. Then, the electronic device begins controlling the elements displayed on the screens A and B to continue being translated in the first direction for a specific distance or period of time, and then controls the elements to be translated in the second direction until the user interface 1101 shown in FIG. 11A is finally displayed.

In embodiments of this application, the first animation and the second animation conform to the spring curve in the foregoing embodiments. When the first animation in the folding process of the inward foldable display is interrupted, due to a velocity and property continuity capability of an application window, the second animation may inherit a property status, a position, and a velocity of the first animation, to implement smooth transition.

The following describes an animation process in a scenario of switching between folded and unfolded states of a foldable display.

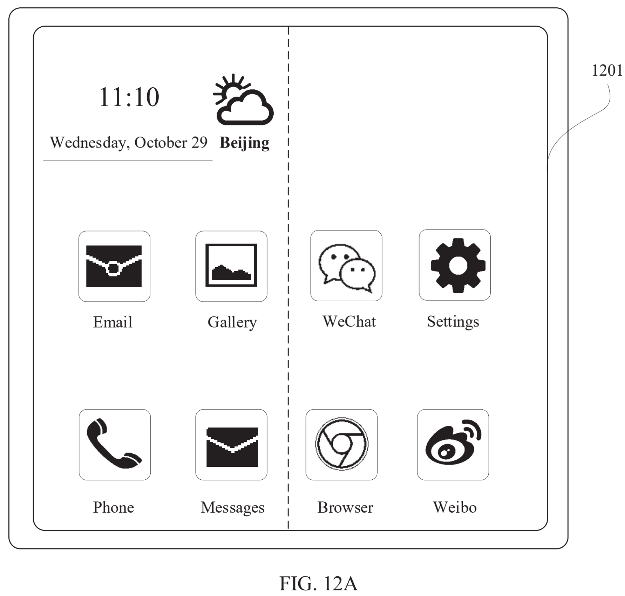

FIG. 12A to FIG. 12C are diagrams of a change in a user interface of an electronic device in a folding process of an outward foldable display from the unfolded state to an intermediate state and then the folded state.

As shown in FIG. 12A, the electronic device is unfolded and displays a user interface 1201 in full screen. The user interface 1201 may be the first frame of image in a first animation. The user interface 1201 includes a plurality of elements. The elements may be one or more of icons of a plurality of applications, desktop widgets, a large folder, a status bar, a page indicator, a wallpaper picture, and the like. For example, the user interface 1201 shown in FIG. 12A includes icons of applications such as Email, Gallery, WeChat, Settings, Phone, Messages, Browser, and Weibo. The desktop widgets may include a date widget (for example, Wednesday, October 29), a time widget (for example, 11:10), and a weather widget (for example, 10°C in Beijing).

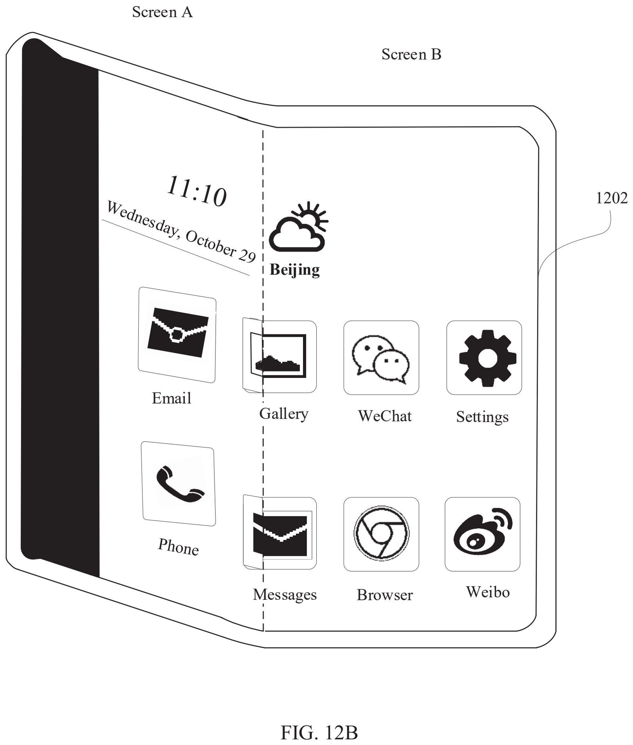

As shown in FIG. 12B, the electronic device receives a user operation, so that screens A and B of an inward foldable display start to fold away from each other. The electronic device continues to play the first animation. That is, the electronic device begins controlling elements displayed on the screens A and B to start being translated in a second direction. The wallpaper picture also starts to be translated in the second direction. The electronic device displays a black region shown in FIG. 12B at a left edge of the screen A. The electronic device displays a user interface 1202 shown in FIG. 12B. The user interface 1202 may be the second frame of image in the first animation. A difference between the user interface 1202 and the user interface 1201 lies in that a display position of each element in the user interface 1202 is different from that of each element in the user interface 1201. The icon of Email is used as an example for description. In the first frame of image, a display position of the icon of Email is A. The electronic device translates the display position of the icon of Email for a specific distance, to obtain a display position of the icon of Email in the second frame of image. In the second frame of image, the display position of the icon of Email is B. In other words, a display position of the icon of Email in the user interface 1202 is B. The position B is different from the position A.

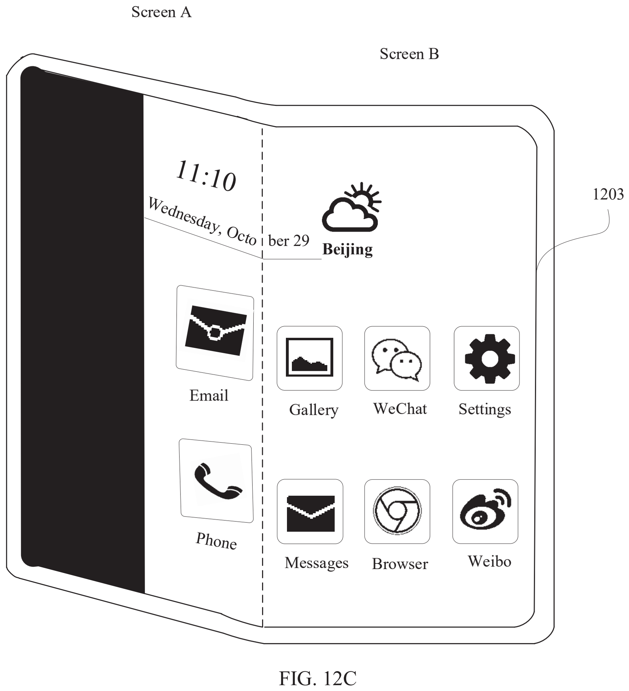

A second animation is played if the folding process is interrupted and the inward foldable display returns to the unfolded state, for example, if an operation of unfolding the foldable display is detected when the electronic device is being folded to a state shown in FIG. 12B. The user interface 1202 may be the first frame of image in the second animation. Then, as shown in FIG. 12C, the electronic device receives a user operation, so that the screens A and B of the inward foldable display continue to fold away from each other. An included angle between the screens A and B shown in FIG. 12C is less than an included angle between the screens A and B shown in FIG. 12B. The electronic device continues to play the first animation. That is, the electronic device begins controlling the elements displayed on the screens A and B to continue being translated in the second direction. The electronic device displays a user interface 1203 shown in FIG. 12C. The user interface 1203 may be the second frame of image in the second animation. A difference between the user interface 1203 and the user interface 1202 lies in that a display position of each element in the user interface 1203 is different from that of each element in the user interface 1202. The icon of Email is used as an example for description. In the second frame of image, the display position of the icon of Email is B. The electronic device translates the display position of the icon of Email for a specific distance, to obtain a display position of the icon of Email in the second frame of image. In the third frame of image, the icon of Email is invisible. The wallpaper picture also starts to be translated in the second direction. In this case, the electronic device displays a black region shown in FIG. 12C at the left edge of the screen A. In some embodiments, a width of the black region may be the same as a distance for which the wallpaper picture is translated in the second direction.

Then, the electronic device receives a user operation, so that the screens A and B of the inward foldable display start to fold toward each other. An included angle between the screens A and B is greater than the included angle between the screens A and B shown in FIG. 12C. The black region at the left edge of the screen A of the electronic device A becomes smaller. Finally, the electronic device is folded under an action of the user operation and displays the user interface 1201 in full screen, as shown in FIG. 12A.

In embodiments of this application, the first animation and the second animation conform to the spring curve in the foregoing embodiments. When the first animation in the folding process of the outward foldable display is interrupted, due to a velocity and property continuity capability of an application window, the second animation may inherit a property status, a position, and a velocity of the first animation, to implement smooth transition.

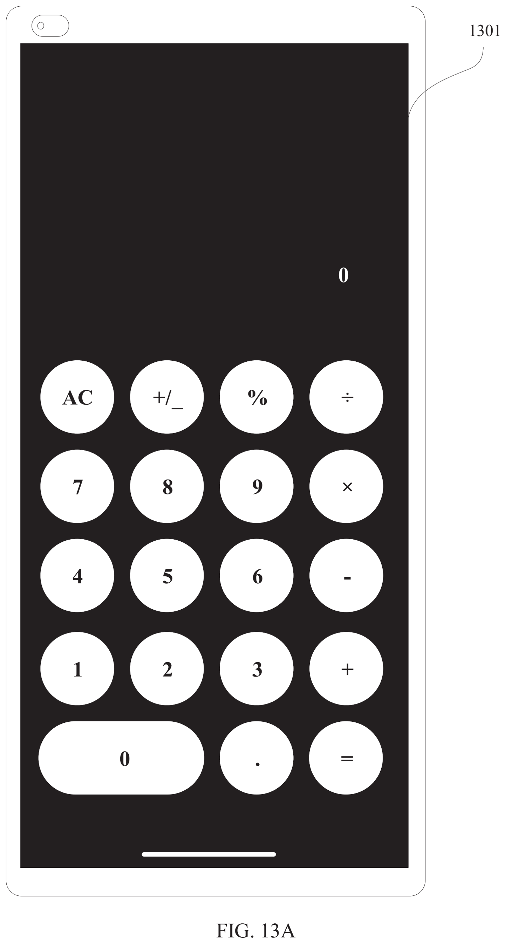

The following describes an animation process in a rotation scenario of switching between landscape and portrait modes with reference to FIG. 13A to FIG. 13E.

As shown in FIG. 13A, an electronic device is in portrait mode and displays a user interface 1301. The user interface 1301 may be the first frame of image in a first animation. The user interface 1301 includes a plurality of elements. The element may be a number, a formula, or a symbol.

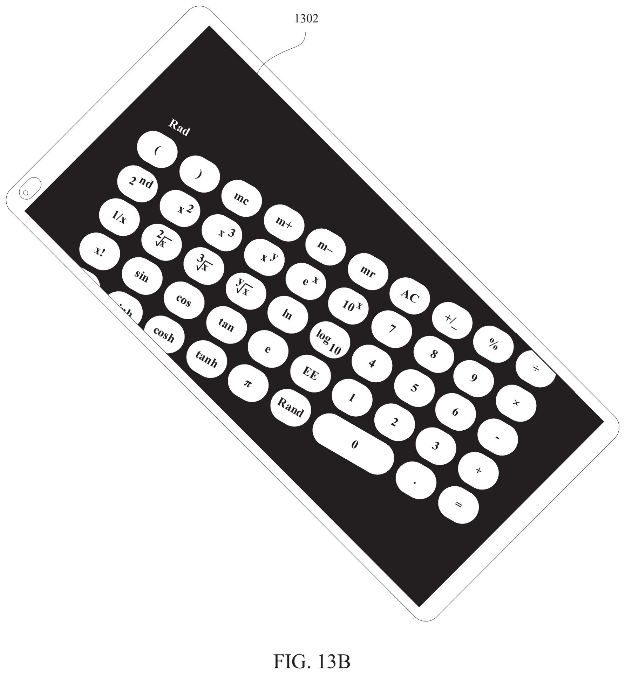

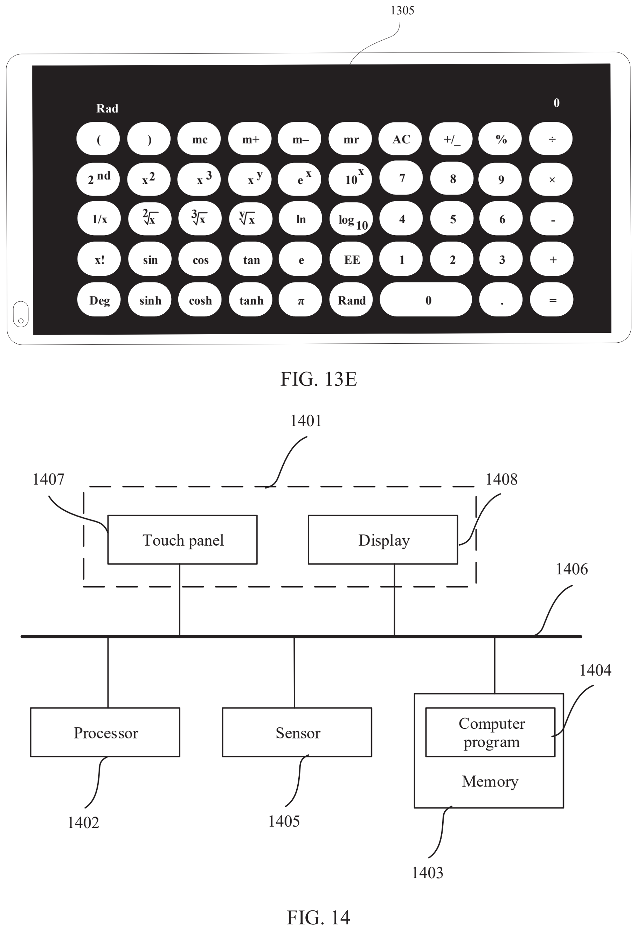

As shown in FIG. 13B, the electronic device receives a user operation, so that the electronic device rotates in a first direction. The electronic device continues to play the first animation. That is, the electronic device begins controlling elements displayed on screens A and B to start rotating in the first direction, and displays a user interface 1302 shown in FIG. 13B. The user interface 1302 may be the second frame of image in the first animation. A difference between the user interface 1302 and the user interface 1301 lies in that a display position and a rotation angle of each element in the user interface 1302 are different from those of each element in the user interface 1301. The number 1 is used as an example for description. In the first frame of image, a display position of the number 1 is A. The electronic device translates the display position of the number 1 for a specific distance, to obtain a display position of the number 1 in the second frame of image. In the second frame of image, the display position of the number 1 is B. In other words, a display position of the number 1 in the user interface 1302 is B. The position B is different from the position A. A rotation angle of the number 1 in the user interface 1302 is greater than a rotation angle of the number 1 in the user interface 1301. If the electronic device continues to rotate until the rotation angle reaches 90 degrees, the electronic device is in landscape mode and displays a user interface shown in FIG. 13E.

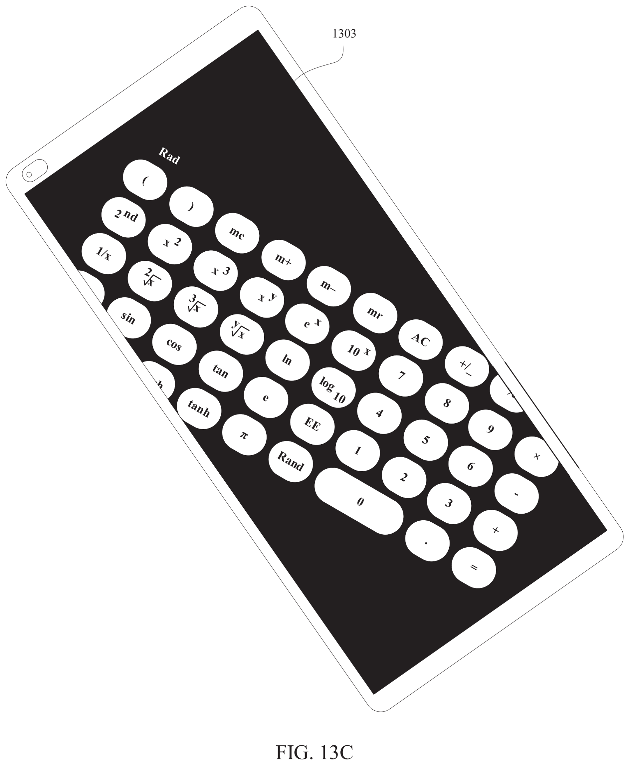

A rotation process is interrupted. For example, the electronic device rotates in a second direction when rotating to a state shown in FIG. 13B. As shown in FIG. 13C, the electronic device receives a user operation, so that the electronic device rotates in the second direction. In this case, the electronic device plays a second animation. The user interface 1302 is the first frame of image in the second animation.

The electronic device displays a user interface 1303 shown in FIG. 13C. A difference between the user interface 1303 and the user interface 1302 lies in that a display position and a rotation angle of each element in the user interface 1303 are different from those of each element in the user interface 1302. The number 1 is used as an example for description. A rotation angle of the number 1 in the user interface 1303 is greater than the rotation angle of the number 1 in the user interface 1302.

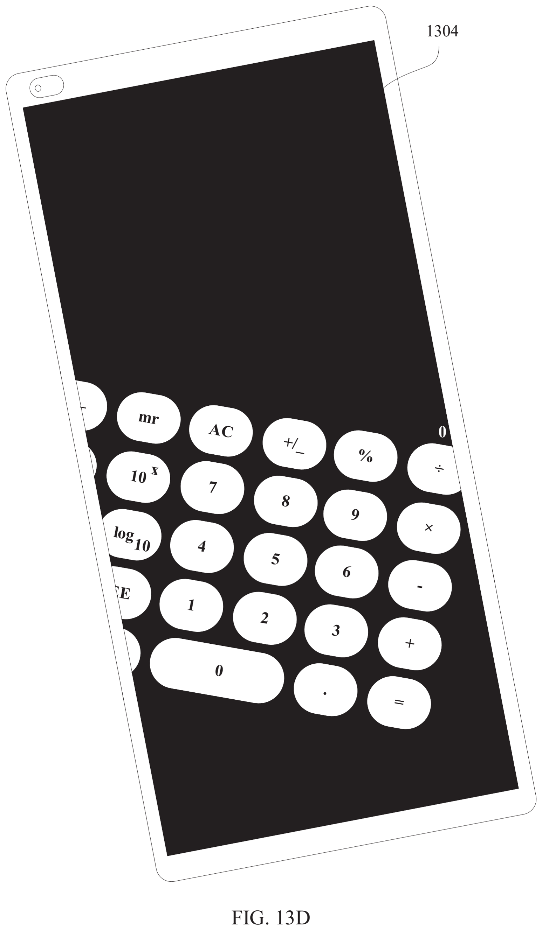

As the electronic device continues to rotate in the second direction, the electronic device displays a user interface 1304 shown in FIG. 13D. A difference between the user interface 1304 and the user interface 1303 lies in that a display position and a rotation angle of each element in the user interface 1303 are different from those of each element in the user interface 1304. The number 1 is used as an example for description. A rotation angle of the number 1 in the user interface 1304 is less than a rotation angle of the number 1 in the user interface 1303.

The electronic device returns to the portrait mode under an action of the user operation and displays the user interface 1301 shown in FIG. 13A.

In embodiments of this application, the first animation and the second animation conform to the spring curve in the foregoing embodiments. When the first animation in the folding process of the inward foldable display is interrupted, due to a velocity and property continuity capability of an application window, the second animation may inherit a property status, a position, and a velocity of the first animation, to implement smooth transition.

The solution provided in embodiments of this application is applicable to a scenario of switching between two animations, for example, switching from a first animation to a second animation. The first image frame of the second animation may be the last frame of image of the first animation. The second animation may continue a final velocity of the first animation and inherit final property information, position, and the like of the first animation. In addition, each property animation of the first animation and the second animation conforms to the spring curve. In this way, smooth transition from the first animation to the second animation can be implemented.

In the foregoing embodiments provided in this application, the method provided in embodiments of this application is described from a perspective of an electronic device serving as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

When hardware is used for implementation, for hardware implementation of the electronic device, refer to FIG. 1 and related descriptions thereof.

Refer to FIG. 14. The electronic device includes a touchscreen 1401, where the touchscreen 1401 includes a touch panel 1407 and a display 1408; one or more processors 1402; a memory 1403; one or more applications (not shown); one or more computer programs 1404; and a sensor 1405. The foregoing components may be connected through one or more communication buses 1406. The one or more computer programs 1404 are stored in the memory 1403 and are configured to be executed by the one or more processors 1402. The one or more computer programs 1404 include instructions. The instructions may be used to perform the method in any one of the foregoing embodiments.

An embodiment of this application further provides a computer storage medium. The computer storage medium stores computer instructions. When the computer instructions are run on an electronic device, the electronic device is enabled to perform the foregoing related method steps to implement the method in the foregoing embodiments.

An embodiment of this application further provides a computer program product. When the computer program product is run on a computer, the computer is enabled to perform the foregoing related steps to implement the method in the foregoing embodiment.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the translation method in the foregoing method embodiments.

The electronic device, the computer storage medium, the computer program product, or the chip provided in embodiments of this application may be configured to perform the corresponding method provided above. Therefore, for beneficial effects that can be achieved, refer to the beneficial effects of the corresponding method provided above. Details are not described herein again.

Based on the descriptions of the foregoing implementations, a person skilled in the art may understand that, for a purpose of convenient and brief description, division into the foregoing functional modules is merely used as an example for illustration. During practical application, the foregoing functions may be allocated to different functional modules and implemented according to a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A display method for an electronic device, applied to an electronic device with a display, wherein the method comprises:

   receiving, by the electronic device, a first operation of a user, wherein the first operation is used to trigger playing of a first animation of a first application;
   invoking, by the electronic device, a UI thread in response to the first operation, to obtain first initial property information and first final property information;
   determining, by the electronic device through a render thread based on the first initial property information and the first final property information, at least one piece of first intermediate property information corresponding to the first animation;
   drawing and rendering, by the electronic device, the first animation through the render thread based on the first initial property information, the first final property information, and the at least one piece of first intermediate property information, to obtain M image frames of the first animation; and

playing, by the electronic device, the first animation based on the M image frames.

2. The method according to claim 1, wherein any one of the first initial property information, the first final property information, and the at least one piece of first intermediate property information comprises at least one of the following: an X-direction scale factor, a Y-direction scale factor, an X-direction translation distance, a Y-direction translation distance, a value of cropping from a left border, a value of cropping from a right border, a value of cropping from a top, a value of cropping from a bottom, transparency, and a rounded corner property value.

3. The method according to claim 1 or 2, wherein the method further comprises:

receiving, by the electronic device, a second operation of the user when playing the first animation, wherein the second operation is used to trigger playing of a second animation of the first application;

invoking, by the electronic device, the UI thread in response to the second operation, to obtain second final property information;

determining, by the electronic device through the render thread based on second initial property information and the second final property information, at least one piece of second intermediate property information corresponding to the second animation, wherein the second initial property information is property information corresponding to an image frame displayed when the electronic device receives the second operation;

drawing and rendering, by the electronic device, the second animation through the render thread based on the second initial property information, the second final property information, and the at least one piece of second intermediate property information, to obtain N image frames of the second animation; and

playing, by the electronic device, the second animation based on the N image frames.

4. The method according to claim 3, wherein before the electronic device receives the first operation of the user, the method comprises:

displaying, by the electronic device, a home screen; wherein

the first animation is a startup animation of the first application, and after the electronic device receives the second operation of the user, the method further comprises:

if an operation distance of the second operation is less than a threshold, determining that the second animation is a hand-following animation; or

if the operation distance of the second operation is greater than or equal to the threshold, determining that the second animation is a return-to-home animation.

5. The method according to claim 3, wherein the first application is in a started state when the electronic device receives the first operation of the user, the first animation is an exit animation of the first application, and the second animation is a reverse animation of the exit animation.

6. The method according to any one of claims 3 to 5, wherein property information corresponding to the M image frames of the first animation and property information corresponding to the N image frames of the second animation conform to a spring curve.

7. The method according to any one of claims 3 to 6, wherein an animation leash corresponding to the second animation is the same as an animation leash corresponding to the first animation.

8. An electronic device, comprising a processor, a memory, and a display, wherein

the display is configured to display a user interface; and

the memory is configured to store one or more computer programs, and when the computer program is executed by the processor, the electronic device is enabled to:

receive a first operation of a user, wherein the first operation is used to trigger playing of a first animation of a first application;

invoke a UI thread in response to the first operation, to obtain first initial property information and first final property information;

determine, through a render thread based on the first initial property information and the first final property information, at least one piece of first intermediate property information corresponding to the first animation;

draw and render the first animation through the render thread based on the first initial property information, the first final property information, and the at least one piece of first intermediate property information, to obtain M image frames of the first animation; and

play the first animation based on the M image frames.

9. The electronic device according to claim 8, wherein any one of the first initial property information, the first final property information, and the at least one piece of first intermediate property information comprises at least one of the following:

an X-direction scale factor, a Y-direction scale factor, an X-direction translation distance, a Y-direction translation distance, a cropping value from a left border, a cropping value from a right border, a cropping value from a top, a cropping value from a bottom, transparency, and a rounded corner property value.

10. The electronic device according to claim 8 or 9, wherein when the computer program is executed by the processor, the electronic device is further enabled to:

receive a second operation of the user when playing the first animation, wherein the second operation is used to trigger playing of a second animation of the first application;

invoke the UI thread in response to the second operation, to obtain second final property information;

determine, through the render thread based on second initial property information and the second final property information, at least one piece of second intermediate property information corresponding to the second animation, wherein the second initial property information is property information corresponding to an image frame displayed when the electronic device receives the second operation;

draw and render the second animation through the render thread based on the second initial property information, the second final property information, and the at least one piece of second intermediate property information, to obtain N image frames of the second animation; and

play the second animation based on the N image frames.

11. The electronic device according to claim 10, wherein when the computer program is executed by the processor, the electronic device is further enabled to:

display a home screen; and

if an operation distance of the second operation is less than a threshold, determine that the second animation is a hand-following animation; or

if the operation distance of the second operation is greater than or equal to the threshold, determine that the second animation is a return-to-home animation.

12. The electronic device according to claim 10, wherein the first animation is an exit animation of the first application, and the second animation is a reverse animation of the exit animation.

13. The electronic device according to any one of claims 10 to 12, wherein property information corresponding to the M image frames of the first animation and property information corresponding to the N image frames of the second animation conform to a spring curve.

14. The electronic device according to any one of claims 10 to 13, wherein an animation leash corresponding to the second animation is the same as an animation leash corresponding to the first animation.

15. A computer-readable storage medium, wherein the computer-readable storage medium comprises a computer program, and when the computer program is run on an electronic device, the electronic device is enabled to perform the method according to any one of claims 1 to 7.

16. A computer program product, wherein the computer program product stores a computer program, the computer program comprises program instructions, and when the program instructions are executed by a computer, the computer is enabled to perform the method according to any one of claims 1 to 7.

Electronic device 100

FIG. 1

EP 4 657 248 A1

FIG. 2A

FIG. 2B

301

An electronic device receives a first operation of a user, where the first operation is used to trigger playing of a first animation of a first application

302

The electronic device invokes a UI thread in response to the first operation, to obtain initial property information and final property information that correspond to the first animation

303

The electronic device determines, through a render thread based on the initial property information and the final property information, at least one piece of intermediate property information corresponding to the first animation

304

The electronic device draws and renders the first animation through the render thread based on the initial property information, the final property information, and the at least one piece of intermediate property information

305

The electronic device plays the first animation

FIG. 3

FIG. 4A

FIG. 4B

China Mobile 4G 11:12

Discover

Moments

Scan

Shake

420

Top Stories

Search

People Nearby

Shopping

Games

Mini Programs

Chats Contacts Discover Me

FIG. 4C

FIG. 5A

FIG. 5B

FIG. 6A

FIG. 6B

FIG. 6C

FIG. 6D

FIG. 6E

FIG. 7A

FIG. 7B

11:10

405

Wednes

t5

Email

Settings

Phone   Messages   Browser   Weibo

FIG. 8A

FIG. 8B

FIG. 8C

FIG. 8D

802

t7

801

t6

803

t8

804

t9

805

t10

806

t11

FIG. 8E

| UI thread | Framework layer | Render thread |
|---|---|---|

S1: Receive an interrupt operation when an application 1 is in a started/ launched sate

S2: Process an interrupt gesture

S3: Create a hand-following animation

S4: Request a window animation leash

Alt1 [A swipe distance is less than a threshold]

S5: Reuse a startup animation leash

S6: Start the window hand-following animation

S7: Update a final value of the animation

S8: Update the final value

S9: End (end) message

S10: The hand-following animation ends

TO FIG. 9B

TO FIG. 9B

TO FIG. 9B

FIG. 9A

CONT.
FROM
FIG. 9A

CONT.
FROM
FIG. 9A

CONT.
FROM
FIG. 9A

[ELSE (ELSE)]

S11: Create a return-to-home animation of the application 1

S12: Request an animation leash

S13: Reuse the startup animation leash

S14: Start the home animation

S15: Update a final value of the return-to-home animation

S16: Update the final value

S18: The return-to-home animation ends

S17: End (end) message

TO
FIG. 9C

TO
FIG. 9C

TO
FIG. 9C

FIG. 9B

CONT.
FROM
FIG. 9B

CONT.
FROM
FIG. 9B

CONT.
FROM
FIG. 9B

S19: Tap the
application 1

Alt2 [The return
animation has ended]

S20: Start the
application 1

[ELSE (ELSE)]

S21: Continue to use a
return animation leash

S22: Start a reverse
animation of the return
animation

S23: Update a final value
of the animation

S24: Update the
final value

S25: End (end)
message

S26: The startup animation
ends

S27: Switch the
application 1 to the
foreground

FIG. 9C

FIG. 10

Screen A          Screen B

1101

11:10

Wednesday, October 29  **Beijing**

Email       Gallery       WeChat      Settings

Phone      Messages      Browser      Weibo

FIG. 11A

Screen A

Screen B

1102

11:10

Wednesday, October 29

Beijing

Gallery

Email

Phone

Messages

WeChat

Settings

Browser

Weibo

FIG. 11B

Screen B

Screen A

1103

Beijing

October 29

Gallery

WeChat

Settings

Messages

Browser

Weibo

FIG. 11C

Screen C

1104

**Beijing**

Email

Phone

FIG. 11D

Screen C

1105

11:10

Wednesday, October 29

Beijing

Email

Gallery

Phone

Messages

FIG. 11E

FIG. 12A

Screen A

Screen B

1202

11:10

Wednesday, October 29

Beijing

Email

Gallery

WeChat

Settings

Phone

Messages

Browser

Weibo

FIG. 12B

FIG. 12C

FIG. 13A

FIG. 13B

1303

FIG. 13C

1304

FIG. 13D

FIG. 13E

FIG. 14

## INTERNATIONAL SEARCH REPORT

| International application No. |
| --- |
| **PCT/CN2024/083106** |

### A. CLASSIFICATION OF SUBJECT MATTER

G06F 9/451(2018.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 动画, 动效, 卡顿, 掉帧, 丢帧, 图像帧, UI线程, 主线程, 渲染线程, 初始帧; animation, motion, stuttering, drop frame, lost frame, image frame, UI thread, main thread, render thread, initial frame

### C. DOCUMENTS CONSIDERED TO BE RELEVANT

| Category* | Citation of document, with indication, where appropriate, of the relevant passages | Relevant to claim No. |
| --- | --- | --- |
| X | CN 115408071 A (HUAWEI TECHNOLOGIES CO., LTD.) 29 November 2022 (2022-11-29) description, paragraphs 4-406, and figures 1A-14 | 1-16 |
| A | CN 114443269 A (HONOR DEVICE CO., LTD.) 06 May 2022 (2022-05-06) entire document | 1-16 |
| A | CN 115016706 A (HONOR DEVICE CO., LTD.) 06 September 2022 (2022-09-06) entire document | 1-16 |
| A | CN 115048012 A (HONOR DEVICE CO., LTD.) 13 September 2022 (2022-09-13) entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 June 2024** | **13 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/083106**

| Patent document cited in search report | | | Publication date (day/month/year) | Patent family member(s) | | | Publication date (day/month/year) |
|---|---|---|---|---|---|---|---|
| CN | 115408071 | A | 29 November 2022 | WO | 2022247542 | A1 | 01 December 2022 |
| | | | | EP | 4325355 | A1 | 21 February 2024 |
| CN | 114443269 | A | 06 May 2022 | CN | 114443269 | B | 01 August 2023 |
| CN | 115016706 | A | 06 September 2022 | CN | 115016706 | B | 30 May 2023 |
| CN | 115048012 | A | 13 September 2022 | CN | 115048012 | B | 25 April 2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310294472